(19) Europäisches Patentamt / European Patent Office / Office européen des brevets

(11) **EP 3 670 339 B1**

(12) **FASCICULE DE BREVET EUROPEEN**

(45) Date de publication et mention de la délivrance du brevet:
**15.06.2022 Bulletin 2022/24**

(21) Numéro de dépôt: **19213516.8**

(22) Date de dépôt: **04.12.2019**

(51) Classification Internationale des Brevets (IPC):
**B64C 27/00** *(2006.01)*

(52) Classification Coopérative des Brevets (CPC):
**B64C 27/006;** B64D 2027/026; B64D 2045/0085;
Y02T 10/70; Y02T 50/60

(54) **PROCEDE D'ASSISTANCE POUR AERONEF MONOMOTEUR A VOILURE TOURNANTE LORS D'UNE PANNE MOTEUR**

VERFAHREN ZUR UNTERSTÜTZUNG EINES EINMOTORIGEN DREHFLÜGELFLUGZEUGES IM FALLE EINES MOTORAUSFALLS

METHOD FOR ASSISTING A SINGLE-ENGINE ROTARY-WING AIRCRAFT IN THE EVENT OF AN ENGINE FAILURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2018 FR 1873625**

(43) Date de publication de la demande:
**24.06.2020 Bulletin 2020/26**

(73) Titulaire: **Airbus Helicopters**
**13725 Marignane Cedex (FR)**

(72) Inventeurs:
• **ZOPPITELLI, Elio**
  **13480 Cabries (FR)**
• **JAMOT, Michel**
  **13100 Aix en Provence (FR)**
• **CAMUS, Jérémy**
  **13820 Ensues la Redonne (FR)**
• **MAEGEY, Olivier**
  **13100 Aix en Provence (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 2 886 456      EP-A1- 3 064 437**
**US-A- 4 500 966      US-A1- 2014 054 411**
**US-B2- 9 008 942**

**Description**

La présente invention se situe dans le domaine technique des installations motrices des aéronefs monomoteurs à voilure tournante. L'invention concerne un procédé d'assistance pour aéronef monomoteur à voilure tournante lors d'une panne moteur, et en particulier pour la réalisation de la phase de vol en autorotation consécutive à cette panne. L'invention concerne également un aéronef monomoteur à voilure tournante comportant un dispositif d'assistance lors d'une panne moteur.

Un aéronef à voilure tournante est classiquement pourvu d'au moins un rotor principal pour assurer sa sustentation voire sa propulsion et généralement d'un rotor arrière pour notamment s'opposer au couple en lacet exercé par le rotor principal sur le fuselage de cet aéronef ou pour aussi permettre de contrôler des mouvements en lacet de cet aéronef ainsi que des vols latéraux.

Afin d'entraîner en rotation le rotor principal et le rotor arrière, l'aéronef comporte une installation motrice qui peut comporter un ou plusieurs moteurs principaux, généralement un ou plusieurs moteurs principaux thermiques. Toutefois, une installation motrice peut éventuellement comporter uniquement un ou plusieurs moteurs principaux électriques.

Il est à noter que l'expression « moteur thermique » désigne par commodité dans l'ensemble du texte les turbomoteurs ou encore les moteurs à pistons pouvant être utilisés dans une telle installation motrice. L'expression « moteur thermique » est à opposer à l'expression « moteur électrique » qualifiant les moteurs mus par une puissance électrique.

On distingue notamment les aéronefs du type « monomoteur », dont l'installation motrice comporte un unique moteur principal pour mettre en mouvement le rotor principal et le rotor arrière, et les aéronefs du type « bimoteur », dont l'installation motrice possède deux moteurs principaux à cet effet.

Les aéronefs monomoteurs présentent des avantages non négligeables par rapport aux aéronefs munis d'au moins deux moteurs thermiques. A titre d'exemple, on peut citer un coût raisonnable, des opérations de maintenance réduites, une consommation en carburant relativement faible.

Cependant, ces aéronefs monomoteurs présentent aussi des inconvénients.

En cas d'une avarie sur cet unique moteur principal, l'installation motrice, et par suite l'aéronef monomoteur, présente des performances dégradées, pouvant aller lors d'une panne de ce moteur principal jusqu'à l'incapacité d'entraîner le rotor principal et le rotor arrière, ce qui est susceptible d'engendrer une situation dangereuse, augmentant significativement la charge du pilote de l'aéronef. En effet, lors de cette panne, le rotor principal n'étant plus entraîné par l'installation motrice, ce pilote doit tout d'abord entrer dans une phase de vol en autorotation, puis réaliser un atterrissage d'urgence, le rotor principal étant en autorotation.

Une phase de vol en autorotation correspond à une phase de vol particulière dans laquelle l'aéronef vole en descente sans puissance motrice, mais au prix d'un taux de descente assez important. L'expression « taux de descente » désigne la perte de hauteur de l'aéronef par unité de temps, cette perte de hauteur étant généralement exprimée en pieds par minute (ft/min), (1ft = 0.3048 mètre). Par exemple, le taux de descente en autorotation pour un aéronef monomoteur est de l'ordre de 1500 ft/min.

Dans ce cas, la rotation du rotor principal est engendrée par le flux d'air ascendant sans disposer d'une source d'énergie, permettant à l'aéronef de rester pleinement manœuvrable, notamment en permettant toute manœuvre consommatrice d'énergie. En effet, le rotor principal, alors entraîné en rotation par le vent relatif, reste le siège d'une portance stabilisée suffisante pour freiner la descente de l'aéronef et conserver un contrôle limité de l'aéronef, notamment en lacet, jusqu'à l'atterrissage.

Par contre, le pilote, qui doit appliquer cette procédure particulière de pilotage, doit être très attentif pour d'une part entrer dans un premier temps en phase d'autorotation lors de l'apparition de cette panne, en baissant rapidement le levier de pas collectif et en contrôlant le mouvement de lacet de l'aéronef, et d'autre part dans un deuxième temps exécuter jusqu'à l'atterrissage la poursuite de cette manœuvre toujours délicate, en maintenant une vitesse de rotation du rotor principal dans les limites admissibles. De plus, la charge du pilote augmente pour manœuvrer l'aéronef en toute sécurité dans cette phase de vol en autorotation, jusqu'à un atterrissage d'urgence dans une zone appropriée. Cette procédure particulière exige une grande précision et un entraînement adapté et récurrent de la part du pilote de l'aéronef. Il s'agit d'une partie délicate du pilotage des aéronefs notamment monomoteurs et une des raisons principales de la réduction du domaine de vol et de l'emploi de ce type d'aéronef.

En effet, le domaine de vol autorisé pour les aéronefs monomoteurs est réduit par les offices de certification délivrant les autorisations de vol. Il est par exemple interdit de survoler avec un aéronef monomoteur une grande ville. De même, les capacités autorisées des aéronefs monomoteurs, telles que la masse maximum embarquée, peuvent être limitées vis-à-vis de leurs capacités réelles.

Des solutions ont été envisagées pour assister le pilote d'un aéronef monomoteur à voilure tournante par l'apport d'une énergie complémentaire pour la réalisation d'une phase de vol en autorotation suite à une panne du moteur principal.

On connaît en particulier le document FR 2994687 qui décrit un procédé d'assistance et un dispositif d'assistance comportant un dispositif de stockage d'énergie électrique et une machine électrique entraînant la boîte de transmission principale de puissance d'un aéronef parallèlement à son moteur principal thermique. Selon ce procédé, on surveille pendant un vol le fonctionnement du moteur thermique afin de détecter une panne, notamment par une chute de puissance sur le rotor principal, Puis lorsqu'une panne du moteur thermique est détectée, on commande la machine électrique pour fournir une puissance auxiliaire au rotor principal et au rotor auxiliaire, permettant ainsi d'assister le pilote de l'aéronef dans la réalisation de la phase de vol en autorotation consécutive à la panne.

On connaît aussi le document FR 1560124 qui décrit un dispositif d'assistance comprenant un moteur principal thermique auxiliaire et un embrayage. L'embrayage permet l'entraînement du rotor principal de l'aéronef uniquement par son moteur thermique principal, conjointement par son moteur thermique principal et le moteur thermique auxiliaire du dispositif d'assistance ou encore uniquement par le moteur thermique auxiliaire.

De plus, les documents EP 2692634 et EP 2778048 décrivent des systèmes permettant de stocker de l'énergie lors d'un fonctionnement normal d'un aéronef et de restituer cette énergie pour entraîner le rotor principal de l'aéronef en cas de panne moteur ou bien lors de phases de vol critiques. L'énergie peut être stockée sous forme électrique, hydraulique ou bien mécanique.

Enfin, les documents US 9008942, EP 2886456, EP 3064437 et US 4500966 font partie de l'arrière plan technologique de l'invention.

La présente invention a alors pour objet de proposer un procédé d'assistance pour aéronef monomoteur à voilure tournante lors d'une panne du moteur principal de cet aéronef. Ce procédé permet tout d'abord de détecter une telle panne moteur au plus tôt, puis de gérer en sécurité cette panne moteur par l'apport d'une puissance auxiliaire notamment pour atteindre la phase de vol en autorotation et réaliser un atterrissage d'urgence en limitant les vitesses d'impact de l'aéronef au sol, le rotor principal étant en autorotation.

L'invention permet également avantageusement une augmentation de la charge utile de l'aéronef dans une certaine partie du domaine de vol en permettant une revalorisation de la masse maximale au décollage de l'aéronef. En effet, l'invention permet de répondre aux exigences de certification relatives à la panne moteur dans le cas d'une revalorisation de la masse maximale au décollage, en conservant un niveau de sécurité inchangé vis-à-vis de celui démontré pour la masse maximale initialement définie pour cet aéronef, notamment vis-à-vis du domaine hauteur-vitesse et de l'autorotation.

Selon l'invention, un procédé d'assistance d'un aéronef monomoteur à voilure tournante en cas d'une panne moteur est destiné à un aéronef monomoteur comportant une installation motrice hybride munie d'un unique moteur principal, d'au moins une machine électrique, d'une boîte de transmission principale de puissance et d'au moins un dispositif de stockage d'énergie électrique alimentant au moins une machine électrique.

Cet aéronef comporte également au moins un rotor principal entraîné en rotation au cours d'un vol à une vitesse nominale de rotation par cette installation motrice hybride.

L'expression « vitesse de rotation » du rotor principal d'un aéronef est usuellement utilisée par l'homme du métier pour désigner la fréquence de rotation du rotor principal. Cette vitesse de rotation est alors exprimée en radians par seconde (rad/s) ou bien plus généralement en tours par minute (tr/mn).

De plus, au cours d'un vol, le rotor principal d'un aéronef tourne à une vitesse nominale de rotation, définie par le constructeur de l'aéronef, une légère variation autour de cette vitesse nominale de rotation étant toutefois possible.

Par la suite, par soucis de simplification, l'expression « vitesse de rotation » du rotor principal désignera la vitesse instantanée de rotation du rotor principal, sachant qu'au cours d'un vol, cette vitesse instantanée de rotation est sensiblement égale à la vitesse nominale de rotation.

Une machine électrique est par défaut une machine réversible. Elle peut donc avoir un fonctionnement en mode moteur, la machine électrique transformant une puissance électrique en une puissance mécanique et un fonctionnement en mode générateur, la machine électrique transformant une puissance mécanique en une puissance électrique. Par ailleurs, cette machine électrique peut par exemple être un moteur sans balai dénommé « brushless » en langue anglaise.

Cette machine électrique peut être placée en différentes positions au sein de l'installation motrice hybride selon le document FR 2952907. Par exemple, elle peut être liée à la boîte de transmission principale de puissance, au moteur principal ou bien directement au rotor principal de l'aéronef.

Ce procédé est remarquable en ce qu'il comporte les étapes suivantes :

- une étape d'acquisition d'au moins un paramètre de surveillance S de l'aéronef afin de détecter une éventuelle panne du moteur principal,
- une étape de surveillance d'au moins une machine électrique lorsqu'au moins une relation d'activation comprenant les valeurs instantanées d'au moins un paramètre de surveillance $S$ et de sa dérivée $\frac{dS}{dt}$ par rapport au temps, telle que [Math 1] $S + k_i \frac{dS}{dt}$, est inférieure à un seuil d'activation $Seuil_i$ dédié, de sorte que : [Math 2] $S + k_i \frac{dS}{dt} < Seuil_i$,
- étant un entier positif variant de 1 à $n$, $n$ étant un entier positif supérieur ou égal à 1, et $k_i$ étant un coefficient positif,
- une étape d'assistance du vol de l'aéronef, la au moins une machine électrique fournissant une puissance mécanique auxiliaire *We* au rotor principal de façon régulée, permettant d'assister le pilote de l'aéronef lors de la phase de vol suite à la panne du moteur principal afin de manœuvrer l'aéronef en sécurité, et

- une étape de désactivation de l'étape d'assistance.

Lors d'une panne du moteur principal entraînant une perte totale de la motricité du rotor principal, l'aéronef monomoteur doit entrer sous les commandes de son pilote dans une phase de vol en autorotation, cette phase de vol en autorotation étant une phase de vol en descente sans puissance motrice, l'aéronef restant manœuvrable, sans toutefois bénéficier de toute la manœuvrabilité disponible lorsque le moteur principal est en état de fonctionnement. L'entrée en phase de vol en autorotation doit être initiée par le pilote de l'aéronef dans un délai très court, de l'ordre de 1 à 2 secondes après l'apparition de la panne du moteur principal et selon une procédure particulière visant à maintenir le rotor principal à une vitesse de rotation prédéterminée. Sans action rapide du pilote de l'aéronef suite à cette panne, la vitesse de rotation du rotor principal de l'aéronef décroit très rapidement, provoquant une réduction importante de sa portance, et l'aéronef chute alors sans possibilité de manœuvre jusqu'à l'accident.

Un autre instant critique suite à cette panne du moteur principal est l'atterrissage de l'aéronef. En effet, le rotor principal étant en autorotation, cet atterrissage doit lui aussi être réalisé selon un mode opératoire spécifique et délicat à mettre en œuvre par les pilotes, afin d'éviter notamment un contact très brutal avec le sol. Plus précisément, il s'agit en fin de descente stabilisée de cabrer l'aéronef pour réduire la vitesse d'avancement de l'aéronef et sa vitesse de descente, puis de remettre à plat cet aéronef de manière à toucher le sol avec une assiette sensiblement nulle et de tirer sur le levier de pas collectif, au bon moment, pour amortir la chute de l'aéronef en phase finale d'atterrissage.

Le procédé selon l'invention vise notamment à assister le pilote dans la réalisation tout d'abord de l'entrée en phase de vol en autorotation, puis de l'atterrissage de l'aéronef proprement dit, par la fourniture d'une puissance mécanique auxiliaire *We* au rotor principal.

Au moment de la panne du moteur principal, le rotor principal n'est plus entraîné par le moteur principal et la puissance motrice chute jusqu'à devenir nulle. La puissance motrice du rotor principal peut être un paramètre de surveillance S représentatif de la panne du moteur principal. La rotation du rotor principal subit alors une décélération importante, et par suite sa vitesse de rotation diminue progressivement. La vitesse de rotation *Nr* du rotor principal peut également être un paramètre de surveillance S représentatif de la panne du moteur principal.

Par ailleurs, un paramètre de surveillance S de l'aéronef permettant de détecter une panne du moteur principal peut également être un couple en sortie du moteur principal. En effet, lors d'une panne du moteur principal, la puissance motrice de ce moteur principal chute rapidement, de même que son couple.

Dans le cas où le moteur principal de l'aéronef est un turbomoteur comportant une turbine de compression, un paramètre de surveillance S peut aussi être la vitesse de rotation de cette turbine de compression. En effet, cette turbine de compression n'étant pas liée mécaniquement à la turbine libre de ce moteur principal, sa vitesse de rotation chute rapidement dès qu'une panne a lieu, et plus rapidement que la vitesse de rotation de la boîte de transmission principale de puissance, liée mécaniquement à la turbine libre de ce moteur et au rotor principal.

De plus, la vitesse de rotation d'un arbre lié au générateur de gaz du turbomoteur peut varier de manière importante, le besoin de puissance variant de manière très importante selon les phases de vol de l'aéronef. En particulier, la vitesse de rotation de l'arbre lié au générateur de gaz est comparée avec un seuil d'activation minimum autorisé dans une relation d'activation. Ce seuil d'activation minimum est en général géré par un calculateur moteur connu sous l'acronyme *FADEC* pour la désignation en langue anglaise « Full Authority Digital Engine Control » ou bien tout autre système destiné à éviter l'extinction du turbomoteur.

Il est également possible comme paramètre de surveillance S d'utiliser une ou plusieurs des caractéristiques de fonctionnement du moteur principal lorsqu'il s'agit d'un moteur thermique, telles que les températures et les pressions des fluides du moteur thermique par exemple. La variation de ces caractéristiques de fonctionnement du moteur thermique peut en effet permettre d'identifier qu'une panne de ce moteur principal thermique va bientôt se produire.

La valeur instantanée d'un paramètre de surveillance S quel qu'il soit peut être obtenue par un dispositif de mesure dédié ou bien partagé avec des instruments ou bien d'autres systèmes de l'aéronef.

Le procédé selon l'invention fait ainsi l'acquisition, lors de l'étape d'acquisition, d'au moins un paramètre de surveillance S ainsi que de sa dérivée par rapport au temps. Cette étape d'acquisition est réalisée pendant tout le déroulement du procédé d'assistance selon l'invention, aussi bien pendant le vol proprement dit de l'aéronef que lorsque l'aéronef est au sol, en attente d'un décollage ou bien suite à son atterrissage.

Ensuite, au moins une relation d'activation [Math 1] comprenant les valeurs instantanées d'au moins un paramètre de surveillance S et de sa dérivée par rapport au temps est comparée avec un seuil d'activation $Seuil_i$ dédié à ce paramètre de surveillance $S$, $i$ étant un entier positif variant de 1 à $n$, $n$ étant un entier positif supérieur ou égal à 1, et $k_i$ étant un coefficient positif.

Lors de l'étape de surveillance, une panne du moteur principal de l'aéronef est ainsi considérée comme étant détectée dès qu'au moins une relation d'activation [Math 1] est inférieure à un seuil d'activation *Seuil<sub>i</sub>* dédié à ce paramètre de surveillance S et à cette relation d'activation et conduit à l'activation d'au moins une machine électrique. Le coefficient $k_i$ est choisi de sorte à privilégier la valeur du paramètre de surveillance S ou bien la valeur de sa dérivée dans la comparaison d'une relation d'activation avec un seuil d'activation *Seuil<sub>i</sub>* et, de fait, dans la détection d'une panne du moteur principal.

Le seuil d'activation *Seuil<sub>i</sub>* et le coefficient $k_i$ sont des coefficients dépendants de l'aéronef. Le seuil d'activation *Seuil<sub>i</sub>* dépend également du coefficient $k_i$ choisi, la valeur du seuil d'activation *Seuil<sub>i</sub>* diminuant lorsque la valeur du coefficient $k_i$ augmente.

Le coefficient $k_i$ permet de pondérer l'influence sur le résultat de la relation d'activation de la dérivée par rapport au paramètre de surveillance S. La valeur d'un seuil d'activation *Seuil<sub>i</sub>* est choisie afin d'obtenir un compromis entre une réactivité dans la détection de la panne et une limitation du risque de détection de fausse panne. Toutefois, la valeur d'un seuil d'activation *Seuil<sub>i</sub>* peut être choisie afin de privilégier une grande réactivité dans la détection de la panne ou bien de limiter au minimum le risque de détection de fausse panne. Le coefficient $k_i$ est par exemple compris entre 3 et 5 pour cette relation d'activation.

Les valeurs des seuils d'activation *Seuil<sub>i</sub>* et des coefficients $k_i$ sont par exemple déterminées suite à des simulations numériques et/ou à des essais en vol.

Avantageusement, l'utilisation de la dérivée par rapport au temps d'un paramètre de surveillance S permet d'anticiper la détection d'une panne du moteur principal. En effet, suite à une panne du moteur principal de l'aéronef, un paramètre de surveillance S va varier, mais sa dérivée par rapport au temps, caractérisant sa vitesse de variation, va varier de façons plus importante et plus rapide.

De plus, l'utilisation simultanée de valeurs instantanées d'au moins un paramètre de surveillance S et de sa dérivée par rapport au temps permet de détecter de façon efficace et au plus tôt une panne du moteur principal de l'aéronef, tout en limitant le risque de détecter par erreur une panne inexistante.

De préférence, le procédé selon l'invention utilise un seul paramètre de surveillance S. Toutefois, l'utilisation simultanée de plusieurs paramètres de surveillance S peut être envisagée.

Un paramètre de surveillance S privilégié par le procédé selon l'invention est la vitesse de rotation *Nr* du rotor principal. Dans ce cas, ce procédé compare au moins une relation d'activation comprenant les valeurs instantanées de la vitesse de rotation *Nr* du rotor principal et de sa dérivée $\frac{dNr}{dt}$ par rapport au temps avec un seuil d'activation *Seuil<sub>i</sub>* dédié, telle que [Math 3]

$$Nr + k_i \frac{dNr}{dt}.$$

Par exemple, lorsqu'un paramètre de surveillance S est la vitesse de rotation *Nr* du rotor principal, un seuil d'activation *Seuil<sub>i</sub>* peut être compris entre 90% et 95% d'une vitesse nominale de rotation du rotor principal pour un coefficient $k_i$ égal à 3 et un seuil d'activation *Seuil<sub>i</sub>* peut être compris entre 85% et 90% de cette vitesse nominale de rotation du rotor principal pour un coefficient $k_i$ égal à 5.

Une panne du moteur principal de l'aéronef est alors considérée comme étant détectée dès qu'au moins une telle relation d'activation est inférieure à un seuil d'activation *Seuil<sub>i</sub>* dédié, telle que : [Math 4]

$$Nr + k_i \frac{dNr}{dt} < Seuil_i.$$

Par ailleurs, suivant la phase de vol durant laquelle se produit la panne du moteur principal, la variation du paramètre de surveillance S et/ou de sa dérivée par rapport au temps est différente, voire très différente. Par exemple, si la panne du moteur principal se produit lors d'une phase de vol stationnaire durant laquelle le rotor principal nécessite une puissance importante, la valeur d'un paramètre de surveillance S, et en particulier la vitesse de rotation *Nr* du rotor principal, peut chuter beaucoup plus rapidement que si une telle panne intervenait pendant une phase de vol de croisière à une vitesse d'avancement modérée, et notamment à la vitesse économique de croisière.

En conséquence, le procédé selon l'invention compare de préférence au moins deux relations d'activation comprenant les valeurs instantanées d'un paramètre de surveillance S et de sa dérivée par rapport au temps avec un seuil d'activation *Seuil<sub>i</sub>* dédié, telles que :

[Math 2] $$S + k_i \frac{dS}{dt} < Seuil_i$$, *i* étant un entier positif variant de 1 à *n*, *n* étant un entier positif supérieur ou égal à 2, et $k_i$ étant un coefficient positif.

Dans ce cas, le seuil d'activation *Seuil<sub>i</sub>* et le coefficient $k_i$ sont de préférence des coefficients prédéterminés, dépendants de l'aéronef et constants pour un aéronef donné. Les seuils d'activation *Seuil<sub>i</sub>* et les coefficients $k_i$ peuvent ainsi être adaptés aux différentes situations de vol. Par exemple, un coefficient $k_i$ élevé est réactif pour les pannes avec une chute sévère de la vitesse de rotation du rotor utilisé comme paramètre de surveillance S, mais inadapté pour les autres situations.

Cependant, le procédé selon l'invention peut utiliser une seule relation d'activation, telle que [Math 5]

$$S + k \frac{dS}{dt} < Seuil$$, le coefficient positif *k* étant alors variable en fonction du paramètre de surveillance S et de sa dérivée par rapport au temps afin de prendre en compte les différentes phases de vol. Le seuil d'activation *Seuil* est quand à lui prédéterminé pour un aéronef donné. Ce seuil d'activation *Seuil* peut être constant ou bien variable en fonction du coefficient positif *k* et éventuellement du paramètre de surveillance S et de sa dérivée.

Par ailleurs, les valeurs d'un paramètre de surveillance S sont de préférence obtenues à partir d'informations peu bruitées et finement échantillonnées afin de permettre au procédé selon l'invention de détecter une panne du moteur principal quelle que soit la phase de vol de façon fiable et réactive. Pour cela, chaque dispositif de mesure est de préférence indépendant et dédié à ce procédé. Le bruit, venant entre autre du dispositif de mesure lui-même, de la chaine de transmission de données ou encore de la chaine d'acquisition numérique, notamment dû aux perturbations électromagnétiques, peut être filtré et le calcul de la dérivée peut se faire selon n'importe quel algorithme simple, robuste et rapide. Par exemple un filtre du premier ordre et un calcul de cette dérivée par la formule d'Euler, donne une bonne réactivité au procédé selon l'invention.

Il peut toutefois être intéressant dans ce cas d'utiliser un paramètre de surveillance S rafraîchi à haute fréquence afin de limiter le retard susceptible d'être induit par un tel filtre.

En outre, lorsqu'un paramètre de surveillance S est la vitesse de rotation Nr du rotor principal, le dispositif de mesure dédié à ce paramètre de surveillance S mesure de préférence une vitesse de rotation d'un pignon de la boîte de transmission principale de puissance de l'installation motrice hybride entraînant en rotation le rotor principal, ce pignon étant synchrone avec le rotor principal, à savoir que les vitesses de rotation de ce pignon et du rotor principal sont proportionnelles, et ayant une vitesse de rotation nettement supérieure à celle du rotor principal.

De la sorte, l'information de la vitesse de rotation du rotor principal est plus précise et avec un échantillonnage plus fin qu'avec une mesure directe sur le moyeu du rotor principal. Cette finesse de l'information est primordiale afin de limiter de façon importante l'apparition de bruit et, par suite, d'éviter les éventuels déclenchements intempestifs tout en permettant un temps de détection plus court d'une panne. Ce bruit est d'autant plus néfaste qu'il est amplifié dans notre loi de commande par le même coefficient k que l'on applique à la dérivée du paramètre de contrôle. Ceci peut augmenter le risque d'activation intempestive.

De plus, l'utilisation d'un filtrage de l'information de la vitesse de rotation du rotor principal n'est alors pas systématiquement nécessaire, permettant avantageusement une réactivité plus importante du procédé selon l'invention pour détecter une panne moteur. L'absence d'un tel filtrage de l'information évite en effet l'introduction d'un léger retard potentiellement induit par ce filtrage dans le traitement de cette information.

Par exemple, la vitesse de rotation de ce pignon est de l'ordre de 6000 tr/mn alors que celle du rotor principal est comprise entre 300 et 400 tr/mn.

Ensuite, lors de l'étape de surveillance, au moins une machine électrique est activée lorsqu'une panne du moteur principal est détectée par l'intermédiaire d'au moins une relation d'activation [Math 2] précédemment évoquée. Au moins une machine électrique est alors disponible pour entraîner la boîte de transmission principale de puissance afin de fournir une puissance mécanique au rotor principal dès que la situation le nécessitera.

En outre, chaque machine électrique est reliée de préférence à la boîte de transmission principale de puissance par l'intermédiaire d'un dispositif d'accouplement, par exemple d'un embrayage ou bien d'une roue libre.

De plus, au moins un dispositif de stockage d'énergie électrique peut également être activé lors de l'étape de surveillance si cela est nécessaire afin de fournir un courant électrique lorsqu'une panne du moteur principal est détectée.

Certains dispositifs de stockage d'énergie électrique, telle une batterie ou une supercapacité, qui est un condensateur capable de fournir une puissance importante dans un temps limité, peuvent délivrer un débit d'énergie électrique dès qu'ils sont sollicités ou bien dès leur activation permettant ainsi à une machine électrique de fournir une énergie mécanique au rotor principal sensiblement dès l'activation de ladite machine électrique, à savoir dès la détection d'une panne.

Par contre, d'autres dispositifs de stockage d'énergie électrique, telle une pile à combustible, nécessitent une durée de déclenchement $\Delta t$ non négligeable entre son activation et la fourniture proprement dite d'un courant électrique. Dans ce cas, cette durée de déclenchement $\Delta t$ doit être prise en compte dans la détection de la panne du moteur principal de l'aéronef afin que chaque machine électrique puisse fournir au plus tôt une énergie mécanique au rotor principal.

Le seuil d'activation $Seuil_i$ auquel est comparé chaque relation d'activation [Math 1] est alors de préférence remplacé par un seuil de déclenchement $Seuil_i'$ prenant en compte la durée de déclenchement $\Delta t$ du dispositif de stockage d'énergie électrique tel que : [Math 6]

$$Seuil'_i = Seuil_i - \frac{dS}{dt}.\Delta t$$

.

De la sorte, la détection de la panne est avantageusement anticipée afin que le dispositif de stockage d'énergie électrique soit activé suffisamment tôt pour que chaque machine électrique soit alimentée électriquement et fournisse une énergie mécanique au rotor principal dans le temps requis pour la réalisation de la phase d'autorotation.

Ensuite, après la détection de la panne du moteur principal de l'aéronef et l'activation d'au moins une machine électrique, la au moins une machine électrique est commandée, lors de l'étape d'assistance du vol de l'aéronef, en mode de fonctionnement moteur, c'est-à-dire de façon que la machine électrique puisse fournir une puissance mécanique auxiliaire We au rotor principal. Cette fourniture d'une puissance mécanique auxiliaire We permet alors de réduire la décélération du rotor principal. La chute de la vitesse de rotation du rotor principal est ainsi moins rapide, permettant au pilote une plus grande souplesse dans la manœuvre de récupération de cette vitesse de rotation du rotor principal. L'entrée en phase de vol en autorotation de l'aéronef est alors plus rapide et plus aisée pour le pilote. De plus, cette fourniture de puissance auxiliaire *We* permet également d'augmenter le temps disponible pour le pilote de l'aéronef pour initier l'entrée en phase de vol en autorotation de quelques secondes, par exemple de 1 à 2 secondes.

De plus, lors de l'atterrissage de l'aéronef, afin de réduire, voire de stopper la vitesse de descente et la vitesse d'avancement de l'aéronef, la manœuvre de remise à plat doit être accompagnée d'une augmentation du pas collectif des pales du rotor principal réalisée par le pilote, qui en fournissant une sustentation supplémentaire très provisoire provoque une chute très rapide de la vitesse de rotation de ce rotor principal. Dans le court instant de cette remise à plat et de la mise de pas collectif, la puissance nécessaire au vol augmente et la seule source d'énergie pour le rotor principal est sa propre énergie cinétique de rotation.

Le procédé selon l'invention permet à cet instant de fournir également une puissance auxiliaire *We* permettant d'augmenter la quantité d'énergie cinétique disponible au niveau de ce rotor principal, et, par suite, la quantité d'énergie disponible pour réduire la vitesse de descente et la vitesse d'avancement de l'aéronef. Le pilote peut ainsi disposer d'une énergie supplémentaire pour effectuer un atterrissage sans impact brutal sur le sol et en limitant le glissé de l'aéronef sur le sol. En effet, le pilote se doit de réduire en priorité la vitesse de descente de l'aéronef afin de réaliser un atterrissage sans impact, un glissé de l'aéronef lors de cet atterrissage, dû à une vitesse d'avancement non nulle, étant moins critique.

Enfin, lors de la descente en autorotation, le pilote peut aussi demander de la sustentation supplémentaire au rotor principal afin de manœuvrer l'aéronef, pour notamment éviter un obstacle ou bien atteindre un terrain d'atterrissage approprié. Cette demande de sustentation supplémentaire au niveau du rotor principal s'accompagne encore d'une réduction de la puissance disponible au rotor principal, et, par suite, de sa vitesse de rotation. Le procédé détecte alors cette réduction de la vitesse de rotation du rotor principal, puis commande la machine électrique en mode de fonctionnement moteur pour fournir une puissance auxiliaire *We* au rotor principal. De fait, cette puissance auxiliaire *We* fournie au rotor principal permet la réalisation de la manœuvre demandée par le pilote et de maintenir la vitesse de rotation du rotor principal à la valeur requise en phase d'autorotation, permettant également de réduire le taux de descente de l'aéronef.

Lors de l'étape d'assistance du vol de l'aéronef, au moins une machine électrique fonctionne de préférence de façon régulée afin d'entraîner en rotation le rotor principal jusqu'à l'atterrissage de l'aéronef.

Par exemple, chaque machine électrique peut fournir une puissance maximale avec une limitation sur le courant électrique consommé par chaque machine électrique, une intensité du courant électrique étant inférieure à une valeur limite prédéterminée.

Au moins une machine électrique peut aussi fournir une première puissance auxiliaire prédéterminée au rotor principal pendant une première durée prédéterminée pour l'entrée en phase d'autorotation du rotor principal et une deuxième puissance auxiliaire prédéterminée au rotor principal au moment de l'atterrissage de l'aéronef.

Lors de l'étape d'assistance du vol de l'aéronef, au moins une machine électrique peut également fournir tout d'abord un couple constant jusqu'à délivrer une puissance mécanique auxiliaire *We* égale à une puissance nominale prédéterminée, puis au moins une machine électrique fournit une puissance mécanique auxiliaire *We* égale à la puissance nominale prédéterminée jusqu'à ce qu'au moins un paramètre de surveillance S atteigne une valeur seuil. Au moins une machine électrique est ensuite régulée pour maintenir un paramètre de surveillance S égal à la valeur seuil. La valeur seuil peut être égale à une valeur fonctionnelle caractéristique de l'aéronef, et éventuellement prendre en compte une marge de sécurité.

Lorsque le paramètre de surveillance S est la vitesse de rotation *Nr* du rotor principal, la valeur seuil est égale à une vitesse seuil de rotation prédéterminée du rotor principal. Cette vitesse seuil de rotation prédéterminée est par exemple égale à la vitesse nominale de rotation du rotor principal. Cette vitesse seuil de rotation prédéterminée peut également être supérieure à cette vitesse nominale de rotation, et être par exemple égale à 105% de la vitesse nominale de rotation. Toutefois, la vitesse seuil de rotation prédéterminée doit de préférence être inférieure à une vitesse maximale de rotation du rotor principal désignée « survitesse » et égale par exemple à 111% de la vitesse nominale de rotation. Cette vitesse maximale de rotation correspond à la limite maximale pour la vitesse de rotation *Nr* du rotor principal permise sans entraîner de dommages sur les parties mécaniques du rotor principal et/ou du rotor arrière, notamment pour celles sensibles à la force centrifuge. Cette limite maximale peut également être établie pour des considérations dynamiques des chaînes de transmission mécanique.

Lors de l'étape d'assistance du vol de l'aéronef, chaque machine électrique peut également être régulée en utilisant une valeur seuil comme seule consigne pour un paramètre de surveillance S de sorte à maintenir ce paramètre de surveillance S égal à la valeur seuil.

Lors de l'étape d'assistance du vol de l'aéronef, chaque machine électrique peut également être régulée en utilisant une consigne sur la puissance fournie par la machine électrique. Cette puissance délivrée par au moins une machine électrique est par exemple égale à sa puissance maximale, tout en étant limitée par le couple maximum que chaque machine électrique peut fournir. Cette limitation en couple permet d'éviter qu'un courant électrique trop important traverse au moins une machine électrique évitant ainsi sa dégradation.

Lors de l'étape d'assistance du vol de l'aéronef, chaque machine électrique peut également être régulée en utilisant une consigne sur le couple fourni par la machine électrique. Cette consigne de couple peut de plus être fonction du paramètre de surveillance S et de sa dérivée.

Par exemple, lorsque le paramètre de surveillance $S$ est la vitesse de rotation $Nr$ du rotor principal, le couple fourni par au moins une machine électrique peut être important lorsque la décélération de la vitesse de rotation $Nr$ du rotor principal est forte ou bien que la vitesse de rotation $Nr$ est basse. En particulier, lorsque la dérivée de la vitesse de rotation $Nr$ est inférieure à -15 tours par minute par seconde (-15 tr/mn/s) ou bien que la vitesse de rotation $Nr$ est inférieure à 85% de la vitesse nominale de rotation du rotor principal, chaque machine électrique peut être régulée selon une consigne égale à son couple nominal afin de réagir de façon rapide à la baisse de la vitesse de rotation $Nr$ du rotor principal.

Par contre, le couple fourni par au moins une machine électrique peut être moins important lorsque la décélération de la vitesse de rotation $Nr$ du rotor principal est modérée ou bien que la vitesse de rotation $Nr$ n'est pas trop basse. En particulier, lorsque la dérivée de la vitesse de rotation $Nr$ est supérieure à -15 tr/mn/s ou bien que la vitesse de rotation $Nr$ est supérieure à 85% de la vitesse nominale de rotation du rotor principal, chaque machine électrique peut être régulée selon une consigne inférieure à son couple nominal, typiquement comprise entre 50 et 80% de ce couple nominal. L'utilisation d'un couple moins important permet ainsi avantageusement de limiter l'utilisation de l'énergie électrique stockée dans chaque dispositif de stockage d'énergie électrique.

Par ailleurs, lorsque la panne moteur survient à proximité du sol, la rapidité de réaction est primordiale pour éviter un crash. Il est possible dans ce cas qu'au moins une machine électrique délivre sa puissance maximale dès son activation et jusqu'au posé de l'aéronef. C'est en particulier le cas lorsque l'aéronef se situe à proximité de la limite basse d'un diagramme caractéristique de l'aéronef et dénommé « diagramme hauteur-vitesse ». Cette limite basse est délimitée par le « point bas » et le point dit « genou ». Ce diagramme hauteur-vitesse est spécifique à chaque aéronef, et dépend de la masse de l'aéronef et des conditions atmosphériques. Il détermine en fonction de la vitesse horizontale les valeurs limites de « hauteur sol » au-delà desquelles, en cas de panne moteur, un atterrissage en sécurité en autorotation n'est pas garanti.

La « hauteur-sol » d'un aéronef est sa position par rapport au sol suivant un axe vertical. Ce terme « hauteur-sol » est plus approprié que l'altitude qui définit en fait la position de l'aéronef suivant cet axe vertical, mais par rapport au niveau de la mer. Ainsi, la hauteur-sol définit l'espace disponible entre l'aéronef et le sol, nécessaire par exemple pour réaliser l'entrée en phase de vol en autorotation et l'atterrissage suite à une panne.

Le procédé selon l'invention permet ainsi avantageusement de faciliter l'atterrissage de l'aéronef suite à une panne du moteur principal survenue dans une zone proche de la partie basse du domaine hauteur-vitesse, délimitée par le point bas, correspond à une panne survenue lors d'un vol stationnaire, et le point dit « genou ».

Enfin, l'étape de désactivation de l'étape d'assistance permet de stopper la fourniture au rotor principal de la puissance mécanique auxiliaire $We$ par l'intermédiaire d'au moins une machine électrique. Cette étape de désactivation permet de la sorte avantageusement d'économiser l'énergie électrique stockée dans au moins un dispositif de stockage d'énergie électrique alimentant au moins une machine électrique lorsque l'apport de la puissance mécanique auxiliaire $We$ au rotor principal n'est plus nécessaire.

Cette étape de désactivation peut utiliser une relation de désactivation faisant intervenir au moins un paramètre de surveillance $S$ et éventuellement sa dérivée. Toutefois, cette relation de désactivation est différente de chaque relation d'activation utilisée afin avantageusement d'éviter des désactivations et des activations successives. En effet, l'utilisation d'une relation commune lors de l'étape de surveillance et lors de l'étape de désactivation peut entraîner une désactivation intempestive de l'étape d'assistance rapidement après l'apport d'une puissance mécanique auxiliaire $We$ suite à une réduction de la vitesse de décroissance du paramètre de surveillance $S$ utilisé, correspondant à la dérivée de ce paramètre de surveillance $S$, sans que la valeur de ce paramètre de surveillance $S$ ait augmentée significativement et atteint une valeur suffisante.

Le procédé selon l'invention utilise donc des lois dissymétriques lors des étapes de surveillance et de désactivation.

Par exemple, une relation de désactivation peut permettre de comparer un paramètre de surveillance S utilisé avec un seuil de désactivation, l'étape d'assistance étant désactivée dès que le paramètre de surveillance $S$ utilisé est supérieur ou égal à ce seuil de désactivation. De la sorte, dès que le paramètre de surveillance S utilisé a atteint ou dépassé le seuil de désactivation, le vol de l'aéronef en autorotation peut être réalisé sans l'apport d'une puissance mécanique auxiliaire $We$ malgré la panne moteur détectée. L'apport d'une puissance mécanique auxiliaire $We$ peut donc être arrêté afin avantageusement d'économiser l'énergie électrique stockée dans au moins un dispositif de stockage d'énergie électrique alimentant au moins une machine électrique délivrant cette puissance mécanique auxiliaire $We$.

Une relation de désactivation peut également comporter un paramètre de surveillance S utilisé et sa dérivée et être comparée avec un seuil de désactivation $Seuil_{MAx}$, l'étape d'assistance étant désactivée dès que la relation de désactivation est supérieure ou égale à ce seuil de désactivation $Seuil_{MAx}$. Une telle relation de désactivation s'écrit alors : [Math 7]

$$S + k'\frac{dS}{dt} \geq Seuil_{Max},$$

Le coefficient $k'$ peut être constant ou bien variable en fonction du paramètre de surveillance $S$ utilisé et sa dérivée. Le coefficient $k'$ est par exemple compris entre 1 et 3 dans le cadre de la relation de désactivation.

L'arrêt de cet apport d'une puissance mécanique auxiliaire $We$ permet également d'éviter que le paramètre de surveillance S utilisé atteigne une valeur supérieure à une limite maximale qui pourrait entraîner une dégradation de l'aéronef. En outre, l'utilisation de la dérivée dans la relation de désactivation peut permettre de prendre en compte un délai entre l'ordre de désactivation de l'étape d'assistance et l'arrêt réel de l'apport de puissance mécanique auxiliaire $We$ au rotor principal, d'anticiper de la sorte l'atteinte de cette limite maximale par le paramètre de surveillance S et d'éviter avantageusement son dépassement.

Lorsque le paramètre de surveillance S utilisé est la vitesse de rotation $Nr$ du rotor principal, le seuil de désactivation est par exemple égal à la vitesse nominale de rotation du rotor principal. Ce seuil de désactivation peut également être supérieur à cette vitesse nominale de rotation, et être par exemple égal à 105% de la vitesse nominale de rotation. Toutefois, ce seuil de désactivation doit de préférence être inférieur à une vitesse maximale de rotation du rotor principal désignée « survitesse » et égal par exemple à 111% de la vitesse nominale de rotation.

En outre, le pilote de l'aéronef peut choisir d'arrêter l'apport d'une puissance mécanique auxiliaire $We$ par chaque machine électrique en désactivant volontairement l'étape d'assistance. Le pilote effectue alors une commande, par exemple l'action sur un bouton présent sur le tableau de bord de l'aéronef ou bien sur un écran tactile agencé sur le tableau de bord, afin de désactiver l'étape d'assistance.

Le pilote de l'aéronef peut arrêter l'apport de la puissance mécanique auxiliaire $We$ lorsqu'il juge qu'elle n'est plus nécessaire, par exemple lorsque le moteur principal a redémarré, la panne n'ayant été que temporaire, ou bien lorsque la mise en vol en autorotation est effective, afin d'économiser l'énergie électrique stockée dans chaque dispositif de stockage d'énergie électrique.

Le pilote de l'aéronef peut arrêter l'apport de la puissance mécanique auxiliaire $We$ suite à l'affichage d'une alarme informant l'équipage de l'aéronef d'un évènement particulier. Cette alarme peut par exemple signaler un échauffement important ou bien une dégradation d'une machine électrique. Le pilote peut alors choisir, en fonction des circonstances, de continuer d'utiliser cette machine électrique au risque de la dégrader de façon importante ou bien de la détruire, en adaptant si possible son pilotage, typiquement en baissant le levier de pas collectif afin de l'aider à la réalisation du vol en autorotation. Le pilote peut aussi choisir d'arrêter d'utiliser cette machine électrique en stoppant l'apport de la puissance mécanique auxiliaire $We$ afin de préserver cette machine électrique et de la garder fonctionnelle par exemple pour l'atterrissage de l'aéronef.

De plus, l'étape d'assistance peut être activée suite à une manœuvre particulière du pilote de l'aéronef provoquant par exemple une baisse rapide et importante d'un paramètre de surveillance $S$ bien qu'aucune panne moteur ne soit présente. Le pilote de l'aéronef peut alors désactiver rapidement l'étape d'assistance afin de limiter la consommation de l'énergie électrique stockée dans chaque dispositif de stockage d'énergie électrique. Dans le cas contraire, l'apport de de la puissance mécanique auxiliaire $We$ peut avantageusement permettre au paramètre de surveillance $S$, de revenir rapidement à une valeur nominale ou proche de cette valeur nominale, améliorant en conséquence la sécurité de l'aéronef.

C'est par exemple le cas suite à une augmentation brutale du pas collectif des pales du rotor principal de l'aéronef qui provoque une baisse rapide et importante de la vitesse de rotation $Nr$ du rotor principal. Le moteur principal est capable seul de ramener le rotor principal à une vitesse de rotation $Nr$ proche ou égale à une vitesse nominale de rotation de ce rotor principal sans que la sécurité de l'aéronef soit remise en cause. Toutefois, l'étape d'assistance du procédé selon l'invention permet par l'apport de la puissance mécanique auxiliaire $We$ de faciliter l'augmentation de la vitesse de rotation $Nr$ du rotor principal et de limiter le temps nécessaire pour qu'elle atteigne la vitesse nominale de rotation.

Par ailleurs, le procédé selon l'invention peut comporter au moins une condition d'inhibition interdisant la réalisation de l'étape de surveillance lorsqu'une ou plusieurs conditions sont réunies.

Par exemple, il convient de ne pas déclencher la réalisation de l'étape de surveillance du procédé selon l'invention lorsque l'aéronef est au sol. En effet, au sol, le rotor principal de l'aéronef peut tourner au ralenti, c'est-à-dire à une vitesse de rotation inférieure à la vitesse nominale. Cette vitesse de rotation au ralenti pourrait être identifiée comme une baisse de puissance du rotor principal et par suite comme une panne du moteur principal. Pour éliminer cette possibilité, il est alors intéressant d'utiliser une première information, fournie par un système d'information présent dans l'aéronef, indiquant que l'aéronef est au sol ou bien a décollé, afin d'être sûr que le rotor principal a atteint la vitesse de rotation nominale et pour permettre l'exécution de l'étape de surveillance si nécessaire.

De la sorte, une première condition d'inhibition est cette première information indiquant que l'aéronef est au sol. Cette première information selon laquelle l'aéronef est au sol peut être fournie par un capteur présent dans le train d'atterrissage et détectant un appui au sol de ce train d'atterrissage. Cette première information peut également être la hauteur de l'aéronef par rapport au sol fournie par exemple par une radio sonde et dont la valeur ne varie pas et est inférieure ou égale à une hauteur prédéfinie, par exemple 1 mètre, lorsque l'aéronef est au sol.

Cette information selon laquelle l'aéronef est au sol peut également être obtenue par l'intermédiaire de la surveillance de la vitesse de rotation *Nr* du rotor principal. En effet, lorsque le rotor principal est arrêté ou tourne à un régime très bas, l'aéronef est forcément au sol. Dès lors, pour ne pas avoir de déclenchement intempestif de la machine électrique, une deuxième condition d'inhibition est un premier seuil d'inhibition interdisant la réalisation de l'étape de surveillance lorsque la vitesse de rotation *Nr* du rotor principal est inférieure à ce premier seuil d'inhibition. Ce premier seuil d'inhibition est par exemple égal à 65% de la vitesse nominale du rotor principal.

De plus, il convient ne pas déclencher le procédé selon l'invention lors de phases de vol particulières demandées par le pilote de l'aéronef et exigeantes en termes de charges aérodynamiques. Notamment, lorsque le pilote demande une forte augmentation du pas collectif des pales du rotor principal, une baisse de la vitesse de rotation *Nr* du rotor principal peut intervenir sous l'effet de ces charges aérodynamiques avant que le moteur principal ne puisse rétablir la vitesse nominale de rotation de ce rotor principal.

Dans ce cas, la relation d'activation [Math 1] combinant un paramètre de surveillance *S* et de sa dérivée par rapport au temps peut être inférieure au seuil d'activation correspondant, en particulier lorsque le paramètre de surveillance *S* est la vitesse de rotation *Nr*.

En effet, la baisse de la vitesse de rotation *Nr* du rotor principal peut s'accompagner de valeurs de la dérivée conduisant à ce qu'une relation d'activation [Math 3] soit inférieure au seuil d'activation *Seuil$_i$* alors que le moteur principal ne subit aucune panne. Dans ce cas, la vitesse de rotation *Nr* reste généralement supérieure à une vitesse de rotation prédéterminée. Une troisième condition d'inhibition peut alors être qu'un paramètre de surveillance *S* est supérieur à un deuxième seuil d'inhibition, en particulier que la vitesse de rotation *Nr* est supérieure à une vitesse d'inhibition. La vitesse d'inhibition est par exemple égale à la vitesse nominale du rotor principal ou bien supérieure à la vitesse nominale du rotor principal.

De même, cette baisse de la vitesse de rotation *Nr* du rotor principal peut également se caractériser par une vitesse de rotation *Nr* faible de sorte que la relation d'activation [Math 3] soit inférieure au seuil d'activation *Seuil$_i$* alors que le moteur principal ne subit aucune panne. Par exemple, la vitesse de rotation *Nr* a diminué suite à la forte augmentation du pas collectif des pales du rotor principal, mais le moteur principal permet ensuite à cette vitesse de rotation *Nr* d'augmenter pour revenir vers la vitesse nominale. La dérivée de la vitesse de rotation *Nr* est alors positive, voire très élevée, lorsque le moteur principal de l'aéronef fournit une puissance importante au rotor principal. La dérivée de la vitesse de rotation *Nr* est alors comprise dans un intervalle de valeurs connues. Une quatrième condition d'inhibition peut alors être que la dérivée d'un paramètre de surveillance *S* est comprise dans un intervalle d'inhibition prédéterminé, et en particulier la dérivée de la vitesse de rotation *Nr*.

En outre, au dessus d'une certaine hauteur-sol minimale, les vols stationnaires sont très rares de sorte que l'entrée en phase d'autorotation est facilitée, l'aéronef ayant une vitesse d'avancement non nulle. Ainsi, le procédé selon l'invention peut être opérationnel uniquement en dessous de cette hauteur-sol minimale. Une cinquième condition d'inhibition est alors que l'aéronef évolue au dessus de cette hauteur-sol minimale. Par exemple, la hauteur-sol minimale est égale à 2000 mètres.

Enfin, lors de la formation d'un pilote, notamment pour le former à l'entrée en vol en autorotation, il est nécessaire que l'étape d'assistance ne soit pas activée lorsqu'une panne moteur est simulée. Dans ce but, l'instructeur effectue une action sur un bouton présent sur le tableau de bord de l'aéronef ou bien sur un écran tactile agencé sur le tableau de bord pour signaler qu'il s'agit d'un vol d'entraînement. Une sixième condition d'inhibition est donc une action sur ce bouton ou bien sur cet écran tactile agencé sur le tableau de bord.

En résumé, une condition d'inhibition de la réalisation de l'étape de surveillance peut être choisie parmi la liste suivante :

- l'aéronef est au sol,
- la vitesse de rotation *Nr* du rotor principal est inférieure à un premier seuil d'inhibition,
- l'aéronef est au dessus d'une hauteur-sol prédéterminée,
- il s'agit d'un vol d'entraînement,
- le train d'atterrissage est détecté en appui au sol,
- la valeur fournie par une radio sonde ne varie pas et est inférieure ou égale à une hauteur prédéfinie,
- un paramètre de surveillance *S* est supérieur à un deuxième seuil d'inhibition : par exemple la vitesse de rotation *Nr* du rotor principal est supérieure à une vitesse d'inhibition, et
- la dérivée d'un paramètre de surveillance *S* est comprise dans un intervalle d'inhibition prédéterminé, en particulier la dérivée de la vitesse de rotation *Nr*.

Bien entendu, d'autres conditions d'inhibition de l'étape de surveillance ou bien de l'exécution du procédé selon l'invention peuvent être envisagées.

Par contre, une fois l'étape de surveillance réalisée suite à la détection d'une panne moteur, ces conditions d'inhibition sont sans effet sur le procédé et la machine électrique fournit la puissance auxiliaire *We* requise au rotor principal selon les manœuvres demandées par le pilote.

Le procédé selon l'invention peut également comporter une étape de pré-activation, réalisée avant l'étape de surveillance. Cette étape de pré-activation permet par exemple de sortir le procédé selon l'invention d'un état dormant, et de le placer dans un état de veille.

Un premier critère de pré-activation appliqué lors de cette étape de pré-activation peut être associé à un ou plusieurs paramètres de surveillance S de l'aéronef. Un critère de pré-activation est par exemple une vitesse de rotation $Nr$ du rotor principal supérieure à la vitesse d'inhibition. Le procédé est donc dans cet état dormant lorsque le rotor principal est à l'arrêt ou bien tourne à une vitesse de rotation $Nr$ inférieure à la vitesse d'inhibition. Le procédé passe dans un état de veille dès que le rotor principal tourne à une vitesse de rotation $Nr$ supérieure à la vitesse d'inhibition.

Un deuxième critère de pré-activation peut également être la première information indiquant que l'aéronef n'est plus au sol. La première information peut être fournie, comme évoqué précédemment par un capteur présent dans le train d'atterrissage ou bien par une radio sonde.

On constate que ces premier et deuxième critères de pré-activation sont des informations opposées respectivement aux première et deuxième conditions d'inhibition. Par exemple, si le premier critère de pré-activation est vérifié, la première condition d'inhibition n'est pas vérifiée. L'utilisation de l'étape de pré-activation et de ces critères de pré-activation permet ainsi de retirer les première et deuxième conditions d'inhibition des critères d'inhibition de l'étape d'assistance.

Des critères d'inhibition de l'étape de pré-activation peuvent aussi être appliqués afin de rester dans l'état dormant et de ne pas entrer dans l'état de veille bien que l'étape de pré-activation soit validée. Par exemple, un critère d'inhibition de l'étape de pré-activation peut être une information qu'une opération de maintenance est en cours sur l'aéronef. Un autre critère d'inhibition de l'étape de pré-activation peut être que l'aéronef vient d'atterrir et que sa mission est terminée.

Un autre critère d'inhibition de l'étape de pré-activation peut être une information que l'aéronef est en vol d'entraînement, en particulier afin de former un pilote. Dans ces trois cas, le critère d'inhibition est par exemple une action sur un bouton ou bien sur un écran tactile agencé sur le tableau de bord de l'aéronef.

Le procédé selon l'invention peut également comporter un état « armé » dans lequel chaque machine électrique est prête à fournir sa puissance mécanique. Dans ce but, au moins une machine électrique est démarrée et est synchronisée avec le rotor principal, à savoir que cette au moins une machine électrique tourne à une vitesse de rotation permettant d'entraîner le rotor principal sensiblement à sa vitesse de rotation nominal, mais sans lui fournir de puissance, grâce à l'utilisation d'un dispositif d'accouplement, typiquement une roue libre, entre chaque machine électrique et le rotor principal. Au moins une machine électrique consomme alors une très faible quantité d'énergie, mais peut de façon quasi instantanée fournir une puissance mécanique $We$ en cas de besoin.

Cet état armé comporte alors une étape de synchronisation d'au moins une machine électrique au cours de laquelle la au moins une machine électrique est synchronisée avec le rotor principal. L'étape de surveillance est appliquée dans cet état armé, après l'étape de synchronisation lorsqu'au moins une relation d'activation est respectée.

Cet état armé peut être activé automatiquement lors d'un décollage de l'aéronef, qui est une des phases les plus critiques pour un aéronef à voilure tournante en cas de panne du moteur principal. Cet état armé peut également être activé par le pilote, par exemple par l'intermédiaire d'un bouton ou bien d'un écran tactile agencé sur le tableau de bord de l'aéronef. Cet état armé peut aussi être activé selon une ou plusieurs relations d'armement équivalentes aux relations d'activation, mais avec des seuils d'armement supérieurs aux seuils d'activation de sorte que l'état armé est activé avant qu'au moins une relation d'activation soit validé et avant qu'au moins une machine électrique fournisse une puissance mécanique au rotor principal.

En outre, cet état armé peut être désactivé au bout d'une deuxième durée prédéterminée si aucune relation d'activation n'est validée. Cette seconde durée prédéterminée est par exemple égale à 3 secondes.

Cet état armé peut également être désactivé par le pilote, par exemple par l'intermédiaire d'un bouton ou bien d'un écran tactile agencé sur le tableau de bord de l'aéronef.

Par ailleurs, la fourniture de cette puissance auxiliaire $We$ au rotor principal lors de la panne du moteur principal de l'aéronef peut permettre d'une part une revalorisation de la masse maximum au décollage de l'aéronef monomoteur, et d'autre part l'augmentation du domaine de vol de cet aéronef.

En effet, la masse maximum au décollage d'un aéronef monomoteur est limitée par les performances de cet aéronef en phase de vol en autorotation, notamment pour prendre en compte le cas d'une panne moteur pendant la phase de décollage. En conséquence, la fourniture de la puissance auxiliaire $We$ améliorant les performances de l'aéronef en phase de vol en autorotation peut ainsi permettre une revalorisation de la masse maximum au décollage de l'aéronef.

De plus, le domaine de vol de l'aéronef, caractérisé notamment par le diagramme hauteur-vitesse, peut avantageusement être augmenté grâce à la fourniture de cette puissance auxiliaire $We$ améliorant les performances de cet aéronef en phase de vol en autorotation. En particulier, la zone de ce diagramme hauteur-vitesse à éviter peut être réduite.

D'autre part, la fourniture de la puissance auxiliaire $We$ au rotor principal peut permettre de réduire le taux de descente de l'aéronef en autorotation. Par suite, la distance réalisable par l'aéronef en phase de vol en autorotation peut être augmentée et le pilote de l'aéronef peut plus aisément trouver un terrain d'atterrissage approprié.

L'invention permet ainsi avantageusement d'augmenter la surface de plané de l'aéronef, désignée également « cône d'autorotation » afin d'atteindre des zones de posé plus éloignées et en conséquence d'améliorer la sécurité en cas d'autorotation suite à une panne moteur. De plus, en cas de survol d'une ville, l'invention peut permettre à l'aéronef de poursuivre son vol en palier en cas de panne moteur, afin d'atteindre une aire de posé éloignée et extérieure à la ville.

Par ailleurs, afin de limiter la masse de chaque machine électrique et du au moins un dispositif de stockage de l'énergie électrique qui peut être préjudiciable aux performances de l'aéronef, il est alors nécessaire de limiter ces masses afin d'obtenir un compromis entre la fourniture de la puissance auxiliaire $We$ et l'augmentation de la masse de l'aéronef.

De plus, le temps d'utilisation de chaque machine électrique est limité, de l'ordre de quelques dizaines de secondes. Ainsi, la puissance auxiliaire maximum nécessaire pour gérer en toute sécurité la panne du moteur principal de l'aéronef monomoteur, c'est à dire la puissance maximum que peut fournir la machine électrique, est limitée, de l'ordre de 15 à 30% d'une puissance maximum du moteur principal de l'aéronef.

De fait, l'installation motrice hybride comporte de préférence une seule machine électrique et un seul dispositif de stockage d'énergie électrique afin de limiter la masse de cette installation motrice hybride et, par suite, la masse de l'aéronef.

Les étapes de ce procédé sont réalisées par l'intermédiaire d'une unité de calcul de l'aéronef, tel un calculateur ou un processeur par exemple, et d'au moins une mémoire stockant notamment les différents seuils utilisés et les coefficients $k_i$ dédiés à chaque paramètre de surveillance $S$ ainsi que les différentes relations d'activation et, le cas échéant, de désactivation et d'armement utilisées par le procédé et des instructions permettant la réalisation du procédé. Cette unité de calcul et cette mémoire peuvent être dédiées à la réalisation de ce procédé ou bien partagées avec le système avionique de l'aéronef.

La présente invention a aussi pour objet un aéronef monomoteur à voilure tournante comportant un dispositif d'assistance en cas de panne moteur. Cet aéronef comporte préférentiellement une installation motrice hybride muni d'un unique moteur principal thermique, d'au moins une machine électrique, d'au moins un dispositif de stockage d'énergie électrique et d'une boîte de transmission principale de puissance ainsi qu'au moins un rotor principal entraîné en rotation par l'installation motrice hybride et tournant à une vitesse de rotation $Nr$. D'autres dispositions pour lesquelles le moteur principal ne serait pas thermique, mais par exemple électrique sont envisageables.

Le dispositif d'assistance en cas de panne moteur comporte :

- l'installation motrice hybride,
- un dispositif de commande de la machine électrique,
- un dispositif de surveillance,
- une unité de calcul et
- une mémoire.

Le dispositif d'assistance permet ainsi d'assister un pilote de l'aéronef lors d'une phase de vol en autorotation en mettant en œuvre le procédé d'assistance précédemment décrit.

Le dispositif de surveillance permet de surveiller au moins un paramètre de surveillance $S$ de l'aéronef afin de détecter une éventuelle panne du moteur principal. L'unité de calcul communique notamment avec le dispositif de surveillance et le dispositif de commande, le dispositif de commande étant relié avec la machine électrique, afin de mettre en œuvre le procédé précédemment décrit.

Le paramètre de surveillance $S$ peut par exemple être la puissance du rotor principal qui chute lors d'une panne du moteur principal. Un paramètre de surveillance $S$ privilégié est la vitesse de rotation $Nr$ du rotor principal.

Le dispositif de surveillance comporte alors un dispositif de mesure afin de surveiller au moins un paramètre de surveillance $S$, et en particulier d'évaluer une chute de puissance du rotor principal, par exemple en mesurant la vitesse de rotation $Nr$.

L'unité de calcul du dispositif d'assistance exécute alors des instructions mémorisées dans la mémoire afin de mettre en œuvre les étapes du procédé d'assistance. Le dispositif d'assistance permet ainsi de déterminer s'il y a une panne du moteur principal, puis de commander la machine électrique le cas échéant afin de fournir une puissance mécanique auxiliaire $We$ au rotor principal, permettant ainsi d'assister le pilote de l'aéronef pour la réalisation de la phase de vol en autorotation consécutive à la panne pour manœuvrer l'aéronef.

Un dispositif de stockage peut comporter par exemple au moins une batterie rechargeable au moins une pile à combustible ou bien au moins une supercapacité.

L'invention et ses avantages apparaîtront avec plus de détails dans le cadre de la description qui suit avec des exemples de réalisation donnés à titre illustratif en référence aux figures annexées qui représentent :

- la figure 1, un schéma synoptique du procédé d'assistance d'un aéronef monomoteur en cas de panne moteur,
- la figure 2, un aéronef monomoteur équipé d'un dispositif d'assistance,
- la figure 3, un graphique représentant le diagramme hauteur-vitesse d'un aéronef,
- la figure 4, un logigramme du déroulement d'un procédé d'assistance, et
- la figure 5, un logigramme du déroulement d'un procédé d'assistance.

Les éléments présents dans plusieurs figures distinctes sont affectés d'une seule et même référence.

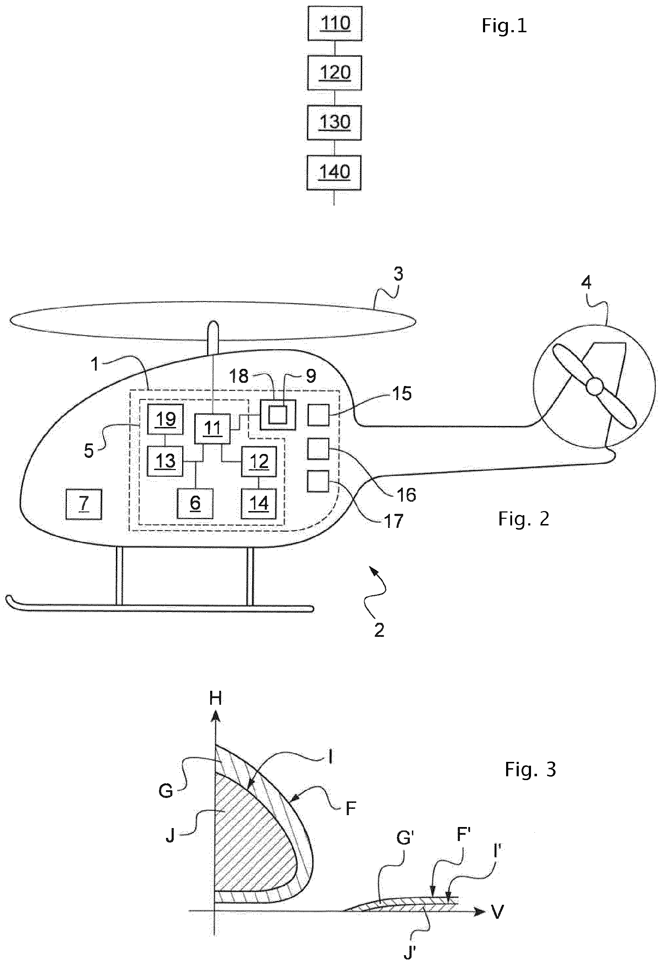

[Fig 1] La figure 1 décrit un procédé d'assistance d'un aéronef 2 monomoteur à voilure tournante pour la réalisation d'une phase de vol en autorotation consécutive à une panne moteur.

[Fig 2] La figure 2 décrit un aéronef 2 monomoteur à voilure tournante équipé d'un dispositif d'assistance 1 configuré pour mettre en œuvre ce procédé.

Ce procédé d'assistance et ce dispositif d'assistance 1 permettent au pilote lors de la panne du moteur principal de cet aéronef 2, d'atteindre en sécurité la phase de vol en autorotation et réaliser un atterrissage de façon assistée et sécurisée.

L'aéronef 2 monomoteur à voilure tournante, représenté sur la figure 2, comporte une installation motrice hybride 5 munie d'un unique moteur principal thermique 13, d'une machine électrique 12, d'une boîte de transmission principale de puissance 11, d'un dispositif de stockage 14 d'énergie électrique et d'un boîtier de contrôle *EECU* 19 fournissant des caractéristiques de fonctionnement du moteur principal 13. Par exemple, le dispositif de stockage 14 comporte une batterie, une pile à combustible ou bien une supercapacité.

L'aéronef 2 comporte également un rotor principal 3 et un rotor arrière 4 entraînés en rotation par l'installation motrice hybride 5.

Le dispositif d'assistance 1 est formé par l'installation motrice hybride 5, un dispositif de surveillance 18, un dispositif de commande 15 de la machine électrique 12, une unité de calcul 17 et une mémoire 16.

Le dispositif de surveillance 18 a pour fonction de mesurer au moins un paramètre de surveillance S du fonctionnement de l'aéronef 2. Chaque paramètre de surveillance S permet de détecter la présence ou bien l'imminence d'une panne du moteur principal 13. Selon l'exemple représenté sur la figure 2, le dispositif de surveillance 18 comporte un dispositif de mesure 9 de la vitesse instantanée de rotation *Nr* du rotor principal 3. On désignera par la suite cette vitesse instantanée de rotation *Nr* par l'expression « vitesse de rotation *Nr* ».

Ce dispositif de mesure 9 mesure plus précisément une vitesse de rotation d'un pignon de la boîte de transmission principale de puissance 11 de l'installation motrice hybride 5 entraînant en rotation le rotor principal 3. Ce pignon est synchrone avec le rotor principal 3 et a une vitesse de rotation nettement supérieure à celle du rotor principal 3. La valeur de la vitesse de rotation du rotor principal 3 obtenue par l'intermédiaire de la mesure de la vitesse du pignon de la boîte de transmission principale de puissance 11 est ainsi plus précise et moins bruitée qu'une mesure directe sur le moyeu du rotor principal 3, car cette vitesse peut être calculée plus fréquemment et ainsi le retard apporté dans la détermination de la vitesse est réduit, ce qui garantit une plus grande réactivité pour la détection de la panne.

Le dispositif d'assistance 1 est configuré pour mettre en œuvre le procédé d'assistance représenté sur la figure 1. Ce procédé d'assistance comporte quatre étapes 110,120,130,140.

Au cours d'une étape d'acquisition 110, au moins un paramètre de surveillance S est surveillé afin de détecter une panne du moteur principal 13. Puis, au cours d'une étape de surveillance 120, la machine électrique 12 est activée lorsqu'une panne du moteur principal 13 est détectée. Une telle panne est détectée en comparant au moins une relation d'activation comprenant les valeurs instantanées d'au moins un paramètre de surveillance S surveillé et de sa dérivée par rapport au temps avec un seuil d'activation *Seuil_i* dédié prédéterminé. Ensuite, au cours d'une étape d'assistance 130, la machine électrique 12 est commandée afin de fournir une puissance mécanique auxiliaire *We* de façon régulée au rotor principal 3, permettant ainsi d'assister un pilote de l'aéronef 2 lors de la phase de vol en autorotation consécutive à cette panne, pour manœuvrer l'aéronef 2 en sécurité, et lors de son atterrissage. Enfin, au cours d'une étape de désactivation 140, l'étape d'assistance 130 est désactivée suite à la comparaison d'une relation de désactivation comprenant les valeurs instantanées d'au moins un paramètre de surveillance *S* surveillé et de sa dérivée par rapport au temps avec un seuil de désactivation dédié prédéterminé.

Au cours de l'étape d'acquisition 110, au moins un paramètre de surveillance *S* est donc mesuré. De plus, la dérivée par rapport au temps d'au moins un paramètre de surveillance *S* est déterminée par l'intermédiaire de l'unité de calcul 17 et des mesures successives de ce paramètre de surveillance *S*. Cette étape de d'acquisition 110 est réalisée pendant tout le déroulement du procédé d'assistance selon l'invention, lorsque l'aéronef 2 est au sol et pendant le vol de l'aéronef 2.

Un paramètre de surveillance *S* privilégié est la vitesse de rotation *Nr* du rotor principal 3. L'unité de calcul 17 permet de déterminer la valeur de la vitesse de rotation *Nr* du rotor principal 3 lorsque le dispositif de mesure 9 mesure la vitesse de rotation d'un pignon de la boîte de transmission principale de puissance 11 synchrone avec le rotor principal 3 selon une relation stockée dans la mémoire 16.

En outre, d'autres paramètres de surveillance *S* peuvent être substitués à la vitesse de rotation *Nr* du rotor principal 3. Par exemple, un paramètre de surveillance *S* est un couple en sortie du moteur principal 13 mesuré par l'intermédiaire d'un couplemètre 6, la valeur de ce couple chutant rapidement lors de la panne du moteur principal. De même, lorsque le moteur principal 13 de l'aéronef 2 est un turbomoteur comportant une turbine de compression, un paramètre de surveillance *S* peut être une des caractéristiques de fonctionnement du moteur principal 13, telles que les températures et les pressions des fluides de ce moteur principal 13 ou encore la vitesse de la turbine de compression afin de détecter la panne du turbomoteur. Ces caractéristiques de fonctionnement du moteur principal 13 sont fournies par le boîtier de contrôle *EECU* 19.

Ensuite, au cours de l'étape de surveillance 120, l'unité de calcul 17 exécute des instructions mémorisées dans la mémoire 16 afin de déterminer s'il y a une panne du moteur principal 13 et de sorte que la machine électrique 12 soit activée dès qu'une panne est détectée. Dans ce but, la mémoire 16 stocke également plusieurs relations d'activation faisant intervenir les valeurs instantanées d'au moins un paramètre de surveillance S surveillé et de sa dérivée par rapport au temps, des coefficients positifs $k_i$ et plusieurs seuils d'activation $Seuil_i$, $i$ étant un entier positif variant de 1 à $n$ et $n$ étant le nombre de relations d'activation. Chaque relation d'activation est alors comparée avec un seuil d'activation $Seuil_i$ et une panne du moteur principal 13 est considérée comme détectée lorsqu'au moins une de ces relations d'activation est inférieure au seuil d'activation $Seuil_i$ correspondant à cette relation d'activation. Les coefficients $k_i$ et les seuils d'activation $Seuil_i$ sont prédéterminés, dépendants de l'aéronef et constants pour un aéronef donné, les seuils d'activation $Seuil_i$ dépendant également du coefficient $k_i$ correspondant. De plus, ces coefficients $k_i$ et ces seuils d'activation $Seuil_i$ sont adaptés aux différentes situations de vol que peut rencontrer l'aéronef 2.

En particulier, lorsque le paramètre de surveillance S surveillé est la vitesse de rotation *Nr* du rotor principal 3, la machine électrique 12 est activée lorsqu'au moins une inéquation [Math 2] est vérifiée.

En effet, lors d'une panne du moteur principal 13, la vitesse de rotation *Nr* chute rapidement. De plus, cette chute de la vitesse de rotation *Nr* se déroule sous une forte décélération, cette décélération étant caractérisée par la dérivée par rapport au temps de la vitesse de rotation *Nr*. De fait, grâce à l'utilisation de cette dérivée, la décélération de la vitesse de rotation *Nr* peut être détectée dès l'instant suivant la panne, alors qu'il faudrait attendre que la vitesse de rotation *Nr* ait atteint une valeur prédéterminée pour être certain qu'il y a réellement une panne si la dérivée n'était pas utilisée.

En outre, une seule relation d'activation [Math 5] peut être comparée à un seul seuil d'activation *Seuil* lors de l'étape de surveillance 120 en remplacement d'un jeu de plusieurs relations d'activation. Le coefficient *k* est alors variable en fonction du paramètre de surveillance *S* et de sa dérivée par rapport au temps afin de couvrir les différentes situations de vol et le seuil d'activation *Seuil* est prédéterminé pour un aéronef donné.

Au cours de l'étape d'assistance 130, après détection d'une panne du moteur principal 13, l'unité de calcul 17 exécute des instructions mémorisées dans la mémoire 16 afin que la machine électrique 12 fournisse une puissance mécanique auxiliaire *We* au rotor principal 3, de sorte à assister le pilote de l'aéronef 2 lors de la phase de vol en autorotation consécutive à cette panne et lors de l'atterrissage de l'aéronef 2.

Lors de l'étape d'assistance 130, la machine électrique 12 est de préférence régulée afin d'entraîner en rotation le rotor principal 3 jusqu'à l'atterrissage de l'aéronef 2.

Par exemple, la machine électrique 12 peut fournir une puissance maximale avec une limitation sur l'intensité du courant électrique consommé par la machine électrique 12.

Selon un autre exemple, la machine électrique 12 peut fournir une première puissance auxiliaire *We* prédéterminée au rotor principal 3 pendant une première durée prédéterminée pour l'entrée en phase d'autorotation et une deuxième puissance auxiliaire *We* prédéterminée au rotor principal 3 au moment de l'atterrissage.

Selon un autre exemple, la machine électrique 12 peut fournir tout d'abord un couple constant jusqu'à délivrer une puissance auxiliaire *We* égale à une puissance nominale prédéterminée, puis la machine électrique 12 fournit cette puissance auxiliaire *We* tant que la vitesse de rotation *Nr* est inférieure à une valeur seuil, tout en respectant les éventuelles limites de la machine électrique 12 ou de la régulation, à savoir, le couple ou la puissance délivré par la machine électrique 12. La machine électrique 12 est ensuite régulée afin de maintenir la vitesse de rotation *Nr* sensiblement égale à la valeur seuil. La valeur seuil est une vitesse de rotation prédéterminée du rotor principal 3, par exemple égale à la vitesse nominale de rotation du rotor principal 3 ou bien supérieure à cette vitesse nominale de rotation.

La machine électrique 12 peut également être régulée en utilisant une valeur seuil comme seule consigne pour la vitesse de rotation *Nr*.

La machine électrique 12 peut encore être régulée en utilisant une consigne sur la puissance fournie par la machine électrique 12, par exemple égale à la puissance maximale de la machine électrique 12, tout en étant limitée par le couple maximum de la machine électrique 12.

La machine électrique 12 peut aussi être régulée en utilisant une consigne sur le couple fourni par la machine électrique 12, éventuellement fonction du paramètre de surveillance *S* et de sa dérivée.

Par ailleurs, lorsque la panne moteur survient à proximité du sol, la rapidité de réaction est primordiale pour éviter un crash. Dans ce cas, la machine électrique 12 délivre sa puissance maximale dès son activation et jusqu'à l'atterrissage de l'aéronef 2.

Enfin, au cours de l'étape de désactivation 140 de l'étape d'assistance 130, l'unité de calcul 17 exécute des instructions mémorisées dans la mémoire 16 afin de vérifier que le paramètre de surveillance *S* utilisé ne dépasse pas une valeur supérieure à une limite maximale qui pourrait entraîner une dégradation de l'aéronef 2 et, en conséquence, de stopper la fourniture de la puissance mécanique auxiliaire *We* par la machine électrique 12. Dans ce but, la mémoire 16 stocke une relation de désactivation faisant intervenir les valeurs instantanées d'au moins un paramètre de surveillance *S* surveillé et éventuellement de sa dérivée par rapport au temps.

Une relation de désactivation est par exemple une comparaison d'un seul paramètre de surveillance *S* avec un seuil de désactivation, l'étape d'assistance 130 étant désactivée dès que ce paramètre de surveillance *S* est supérieur ou égal à ce seuil de désactivation.

Une relation de désactivation peut aussi faire intervenir un paramètre de surveillance *S* et sa dérivée, cette relation de désactivation étant différente de chaque relation d'activation utilisée lors de l'étape de surveillance 120. La relation de désactivation est alors comparée avec un seuil de désactivation $Seuil_{MAx}$, l'étape d'assistance étant désactivée dès que la relation de désactivation est supérieure ou égale à ce seuil de désactivation. Une telle relation de désactivation $Seuil_{MAx}$ s'écrit par exemple, lorsque le paramètre de surveillance S est la vitesse de rotation *Nr* du rotor principal 3 : [Math 7]

$$S + k' \frac{dS}{dt} \geq Seuil_{Max}$$

.

Le coefficient *k'* peut être constant ou bien variable, par exemple en fonction de la vitesse de rotation *Nr* et de sa dérivée par rapport au temps. Par exemple, le coefficient *k'* peut être défini en fonction d'un temps de réaction de la désactivation afin de s'assurer que le retard dans la désactivation ne conduit pas à un dépassement du seuil de désactivation défini.

Cette étape de désactivation 140 permet de la sorte avantageusement de stopper l'apport de la puissance mécanique auxiliaire *We* et d'économiser ainsi l'énergie électrique stockée dans le dispositif de stockage 14 d'énergie électrique et d'éviter tout dommage de l'aéronef.

Cette étape de désactivation 140 peut également utiliser une commande du pilote de l'aéronef 2, en remplacement ou bien complément d'une relation d'activation afin de désactiver l'étape d'assistance 130. Cette commande est par exemple l'action sur un bouton ou bien sur un écran tactile agencé sur le tableau de bord de l'aéronef 2.

En outre, le procédé selon l'invention peut comporter des conditions d'inhibition de l'étape de surveillance 120 interdisant la réalisation de l'étape d'assistance 130. Ces conditions d'inhibition sont par exemple :

- l'aéronef est au sol,
- l'aéronef est au dessus d'une hauteur-sol minimale,
- l'aéronef 2 est en vol d'entraînement,
- le train d'atterrissage de l'aéronef 2 est détecté en appui au sol,
- la hauteur de l'aéronef 2 par rapport au sol fournie par exemple par une radio sonde ne varie pas et est inférieure ou égale à une hauteur prédéfinie,
- la vitesse de rotation *Nr* est supérieure à un deuxième seuil d'inhibition, et
- la dérivée de la vitesse de rotation *Nr* est comprise dans un intervalle d'inhibition prédéterminé.

L'information selon laquelle l'aéronef 2 est au sol peut être fournie par un système d'information 7 que comporte l'aéronef 2. Ce système d'information 7 peut être intégré au système avionique de l'aéronef 2. De même, l'information selon laquelle train d'atterrissage de l'aéronef 2 est au sol est fournie par un capteur dédié relié typiquement au système avionique de l'aéronef 2.

De même, le procédé selon l'invention peut comporter une ou plusieurs conditions d'inhibition de l'étape de désactivation 140 interdisant d'arrêter la réalisation de l'étape d'assistance 130.

De plus, lorsque le dispositif de stockage d'énergie électrique est une pile à combustible ou bien tout autre dispositif de stockage d'énergie électrique nécessitant une durée de déclenchement Δt non négligeable entre son activation et la fourniture proprement dite d'un courant électrique, cette durée de déclenchement Δt est prise en compte dans la détection de la panne du moteur principal de l'aéronef.

Dans ce cas, le seuil d'activation $Seuil_i$ est par exemple remplacé par un seuil de déclenchement $Seuil_i'$ pour la comparaison avec chaque relation d'activation [Math 1], tel que : [Math 6]

$$Seuil'_i = Seuil_i - \frac{dS}{dt} . \Delta t$$

.

Par ailleurs, la fourniture de cette puissance auxiliaire *We* par la machine électrique 12 au rotor principal 3 lors de la panne du moteur principal 13 peut permettre d'une part une revalorisation de la masse maximum au décollage d'un aéronef 2 monomoteur et d'autre part l'augmentation du domaine de vol de cet aéronef 2.

En effet, la masse maximum au décollage d'un aéronef 2 monomoteur est limitée en particulier par les performances de cet aéronef 2 en phase de vol en autorotation, notamment pour prendre en compte le cas d'une panne moteur pendant la phase de décollage.

De la sorte, la fourniture de la puissance auxiliaire *We* par la machine électrique 12 améliorant les performances de cet aéronef 2 en phase de vol en autorotation peut ainsi permettre une revalorisation de sa masse maximum au décollage.

[Fig 3] En outre, le domaine de vol de l'aéronef 2 est notamment caractérisé par le diagramme hauteur-vitesse représentés sur la figure 3 et comportant deux courbes F et F'. Ce diagramme hauteur-vitesse détermine la vitesse horizontale minimum en abscisse, que doit respecter l'aéronef 2 en fonction de sa hauteur-sol en ordonnée. Les zones G et G' de ce diagramme sont à éviter car la phase de vol en autorotation ne peut pas être alors exécutée en sécurité dans ces zones G et G'.

Avantageusement, la fourniture de la puissance auxiliaire *We* par la machine électrique 12 améliorant les performances de l'aéronef 2 en phase de vol en autorotation permet de réduire les zones G et G' à éviter pour les basses vitesses qui sont remplacées respectivement par les zones J et J', et d'aboutir au diagramme hauteur-vitesse formé par les courbes I et I', augmentant par la même le domaine de vol autorisé de l'aéronef 2.

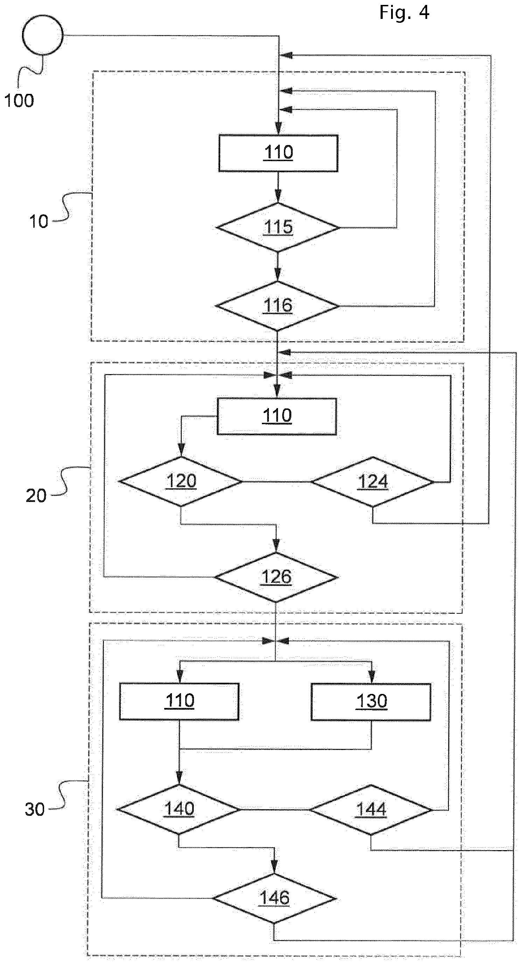

[Fig 4] La figure 4 représente un logigramme décrivant le déroulement d'un exemple de réalisation du procédé d'assistance selon l'invention.

Ce logigramme comporte trois états 10,20,30 du procédé d'assistance, à savoir un état dormant 10, un état de veille 20 et un état activé 30. Le procédé d'assistance selon l'invention se situe dans l'état dormant 10 dès le démarrage de l'aéronef 2. Au cours de cet état dormant 10, l'étape de surveillance 120 ne peut pas être activée. Dans l'état de veille 20, l'étape de surveillance 120 peut être activée lorsque les critères correspondants sont respectés, mais l'étape d'assistance 130 ne peut pas être activée alors que dans l'état activé 30, l'étape d'assistance 130 est activée et la machine électrique 12 fournit la puissance auxiliaire *We.*

L'étape d'acquisition 110 est réalisée pendant tout le déroulement du procédé d'assistance selon l'invention, au cours de chacun de ces trois états 10,20,30.

L'état dormant 10 correspond principalement à un aéronef 2 au sol avant un décollage ou après un atterrissage. Une étape de pré-activation 115 est réalisée dans cet état dormant 10 permettant une sortie de l'état dormant 10 et l'entrée dans l'état de veille 20. Un critère de pré-activation appliqué lors de cette étape de pré-activation 115 et déclenchant la sortie de l'état dormant 10 peut être associé à un ou plusieurs paramètres de surveillance S de l'aéronef 2. Un critère de pré-activation est par exemple une vitesse de rotation *Nr* du rotor principal 3 supérieure à une vitesse de pré-activation. Le procédé est donc dans cet état dormant 10 lorsque le rotor principal 3 est à l'arrêt ou bien tourne à une vitesse de rotation *Nr* inférieure ou égale à la vitesse de pré-activation, sous réserve que le procédé n'ait pas été préalablement placé dans l'état de veille ou l'état activé.

Un critère de pré-activation peut également être une première information indiquant que l'aéronef 2 n'est plus au sol. Le critère de pré-activation est par exemple une indication fournie par un capteur présent dans le train d'atterrissage de l'aéronef 2 et ne détectant aucun appui au sol de ce train d'atterrissage. Le critère de pré-activation peut également être la valeur d'une radio sonde qui varie confirmant que l'aéronef 2 n'est pas fixe ni au sol.

L'état dormant 10 comporte également une première étape d'inhibition 116 de l'étape de pré-activation 115 appliquant un ou plusieurs critères d'inhibition afin de maintenir le procédé d'assistance dans l'état dormant 10 et éviter qu'il n'entre dans l'état de veille 20 bien que l'étape de pré-activation 115 soit validée. Par exemple, un critère d'inhibition appliqué lors de la première étape d'inhibition 116 peut être une information qu'une opération de maintenance est en cours sur l'aéronef 2. En effet, dans ce cas, le rotor principal 3 peut tourner à une vitesse de rotation *Nr* supérieure à la vitesse de pré-activation alors que l'aéronef 2 est au sol et qu'aucun décollage n'est envisagé.

Un critère d'inhibition peut aussi être que l'aéronef 2 vient d'atterrir et que sa mission est terminée. En conséquence, aucun décollage n'est envisagé et le procédé selon l'invention peut être maintenu à l'état dormant 10 alors que la vitesse de rotation *Nr* du rotor principal 3 va alors diminuer avant l'arrêt du moteur principal.

De même, un critère d'inhibition peut être que l'aéronef 2 est en vol d'entraînement, en particulier afin de former un pilote au vol en autorotation. Ce vol d'entrainement doit être réalisé entièrement avec le procédé d'assistance dans l'état dormant 10 afin que le pilote en formation ne bénéficie pas de l'assistance de la machine électrique 12. Dans ces trois cas, le critère d'inhibition est par exemple une action sur un bouton ou bien sur un écran tactile agencé sur le tableau de bord de l'aéronef 2.

L'état de veille 20 correspond à un aéronef 2 en vol ou bien encore au sol et en phase de décollage. L'étape de surveillance 120 est réalisée dans cet état de veille 20 afin de basculer ensuite dans l'état activé 30 et de réaliser alors l'étape d'assistance 130 dès qu'une panne du moteur principal 13 est détectée.

L'état de veille 20 comporte également une première étape de sortie 124 de l'état de veille 20 appliquant un ou plusieurs critères de sortie afin que le procédé d'assistance sorte de cet état de veille 20 et revienne à l'état dormant 10. Un critère de sortie intervient par exemple, suite à un atterrissage de l'aéronef 2. Un critère de sortie est par exemple la première information précédemment décrite indiquant que l'aéronef 2 est posé au sol ou bien une commande du pilote de l'aéronef 2, par exemple par l'intermédiaire d'un bouton ou bien d'un écran tactile agencé sur le tableau de bord de l'aéronef 2.

L'état de veille 20 comporte aussi une deuxième étape d'inhibition 126 de l'étape de surveillance 120 appliquant un ou plusieurs critères d'inhibition afin de maintenir le procédé d'assistance dans l'état de veille 20 et éviter qu'il n'entre dans l'état activé 30 bien que l'étape de surveillance 120 soit validée. Par exemple, un critère d'inhibition appliqué lors de la deuxième étape d'inhibition 126 peut être que l'aéronef 2 est au dessus d'une hauteur-sol minimale. Un critère d'inhibition peut aussi être, le paramètre de surveillance S utilisé étant la vitesse de rotation *Nr* du rotor principal 3, que la vitesse de rotation *Nr* est supérieure au deuxième seuil d'inhibition, ou bien que la dérivée de la vitesse de rotation *Nr* est comprise dans un intervalle d'inhibition prédéterminé.

Suite à la réalisation de l'étape de surveillance 120, une panne moteur ayant été détectée, le procédé selon l'invention sort de l'état de veille 20 pour entrer dans l'état activé 30 et réaliser l'étape d'assistance 130. L'étape de désactivation 140 est également réalisée lors de l'état activé 30 afin d'arrêter l'étape d'assistance 130, si nécessaire, et revenir à l'état de veille 20.

L'état activé 30 comporte également une deuxième étape de sortie 144 de l'état activé 30 appliquant un ou plusieurs critères de sortie afin que le procédé d'assistance sorte de cet état activé 30 et revienne à l'état de veille 20. Un critère de sortie est par exemple une commande du pilote de l'aéronef 2 par l'intermédiaire d'un bouton ou bien d'un écran tactile agencé sur le tableau de bord de l'aéronef 2. Cette action du pilote permet notamment d'économiser l'énergie électrique stockée dans le dispositif de stockage 14 d'énergie électrique lorsque le pilote considère que l'apport de la puissance mécanique auxiliaire *We* au rotor principal 3 n'est plus nécessaire.

L'état activé 30 comporte aussi une troisième étape d'inhibition 146 de l'étape de désactivation 140 appliquant un ou plusieurs critères d'inhibition afin que le procédé d'assistance ne sorte pas de cet état activé 30 et ne revienne pas à l'état de veille 20, l'étape d'assistance 130 n'étant alors pas arrêtée, bien que l'étape de désactivation 140 soit validée.

Par exemple, une relation de désactivation vérifiée lors de l'étape de désactivation 140 vise à protéger un des composants l'aéronef 2 d'une dégradation en comparant la valeur d'un paramètre de surveillance *S* ou bien la relation de désactivation comportant le paramètre de surveillance *S* et sa dérivée avec un seuil de désactivation, un critère d'inhibition appliqué lors de la troisième étape d'inhibition 146 peut être au contraire d'autoriser le dépassement de ce seuil de désactivation par le paramètre de surveillance *S* ou bien par la relation de désactivation. En effet, il est parfois préférable d'accepter la dégradation d'un des composants de l'aéronef 2 afin d'éviter le crash de l'aéronef 2. Un critère d'inhibition est alors le paramètre de surveillance *S* ou bien la relation de désactivation. Ce critère d'inhibition peut éventuellement nécessiter une validation de la part de pilote de l'aéronef, par exemple par l'intermédiaire d'un bouton ou bien d'un écran tactile agencé sur le tableau de bord de l'aéronef 2 après l'émission d'une alarme alertant le pilote que le paramètre de surveillance *S* ou bien la relation de désactivation se rapprochait du seuil de désactivation.

Typiquement, lorsque le paramètre de surveillance *S* est la vitesse de rotation *Nr* du rotor principal 3, un critère d'inhibition appliqué lors de la troisième étape d'inhibition 146 peut être l'autorisation d'une survitesse du rotor principal 3.

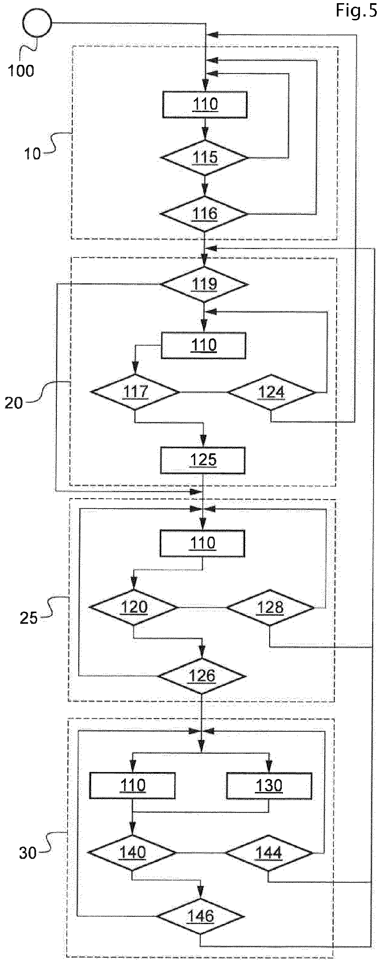

[Fig 5] La figure 5 représente un autre logigramme décrivant le déroulement d'un autre exemple de réalisation du procédé d'assistance selon l'invention.

Ce logigramme comporte quatre états 10,20,25,30 du procédé d'assistance, à savoir un état dormant 10, un état de veille 20 avec armement de la machine électrique 12, un état armé 25 et l'état activé 30. Le procédé d'assistance selon l'invention se situe dans l'état dormant 10 dès le démarrage de l'aéronef 2, cet état dormant 10 étant identique à l'état dormant 10 du logigramme de la figure 4.

L'étape d'acquisition 110 est réalisée pendant tout le déroulement du procédé d'assistance selon l'invention, au cours de chacun de ces quatre états 10,20,25,30.

L'état de veille 20 correspond, comme précédemment à un aéronef 2 en vol ou bien encore au sol et en phase de décollage. L'état de vieille 20 comporte une étape d'armement 117 de la machine électrique 12. Cette étape d'armement 117 permet, lorsqu'elle est validée, que la machine électrique 12 soit démarrée et prête à fournir sa puissance mécanique *We* au rotor principal 3 et que le procédé d'assistance entre dans l'état armé 25.

Dans ce but, l'état de veille 20 comporte une étape de synchronisation 125 au cours de laquelle la machine électrique 12 est synchronisée avec le rotor principal 3 sans lui fournir de puissance, un dispositif d'accouplement, typiquement une roue libre, étant alors agencé entre la machine électrique 12 et le rotor principal 3. De la sorte, la machine électrique 12 peut ensuite fournir avantageusement de façon quasi instantanée la puissance mécanique *We* en cas de besoin.

L'étape d'armement 117 applique par exemple une ou plusieurs relations d'armement équivalentes aux relations d'activation appliquées lors de l'étape de surveillance 120, mais avec des seuils d'armement supérieurs aux seuils d'activation.

L'étape d'armement 117 peut aussi être validée par le pilote de l'aéronef 2, par exemple par l'intermédiaire d'un bouton ou bien d'un écran tactile agencé sur le tableau de bord de l'aéronef 2.

L'état de veille 20 comporte la première étape de sortie 124 de l'état de veille 20 identique à celle du logigramme de la figure 4 et appliquant le ou les critères de sortie évoqués précédemment afin que le procédé d'assistance sorte de cet état de veille 20 et revienne à l'état dormant 10.

L'état de veille 20 comporter aussi une quatrième étape d'inhibition 119 de l'étape d'armement 117.

L'étape d'armement 117 est réalisée avec des critères d'armement plus sensibles que les critères d'activation permettant le passage à l'état activé 30. Dès lors, en cas de turbulences par exemple, des fluctuations d'un paramètre de surveillance S, en particulier de la vitesse de rotation *NR* du rotor principal 3, sont possibles et sont susceptibles de provoquer des déclenchements intempestifs de l'étape de synchronisation 125. Des critères d'inhibition peuvent alors être appliqués lors de la quatrième étape d'inhibition 119 afin d'inhiber l'étape d'armement 117 et l'étape de synchronisation 125 de sorte à placer le procédé d'assistance dans l'état armé 25, sans démarrer la machine électrique 12 appliquant l'étape de surveillance 120 pour entrer dans l'état activé 30 si besoin.

L'état armé 25 comporte l'étape de surveillance 120 afin que le procédé entre dans l'état activé 30 si besoin. L'état armé 25 comporte également une troisième étape de sortie 128 de l'état armé 25 et une étape d'inhibition 126 identique à celle du logigramme de la figure 4.

Lorsque la troisième étape de sortie 128 est validée, le procédé d'assistance quitte l'état armé 25 et retourne à l'état de veille 20 lors que cette troisième étape de sortie 128 est validée. Un critère de sortie appliqué par cette troisième étape de sortie 128 est par exemple une seconde durée prédéterminée au bout de laquelle l'état armé est désactivé, le procédé d'assistance retournant à l'état de veille 20. Un autre critère de sortie peut être une commande du pilote de l'aéronef 2, par exemple par l'intermédiaire d'un bouton ou bien d'un écran tactile agencé sur le tableau de bord de l'aéronef 2.

Suite à la réalisation de l'étape de surveillance 120, une panne moteur ayant été détectée, le procédé d'assistance sort de l'état armé 25 pour entrer dans l'état activé 30 et réaliser l'étape d'assistance 130.

L'état activé 30 est identique à celui du logigramme de la figure 4. Notamment, l'étape de désactivation 140 est également réalisée lors de l'état activé 30 afin d'arrêter l'étape d'assistance 130 et revenir à l'état de veille 20.

## Revendications

1. Procédé d'assistance d'un aéronef (2) monomoteur à voilure tournante en cas de panne moteur, ledit aéronef (2) comportant :

   - une installation motrice hybride (5) munie d'un unique moteur principal (13), d'au moins une machine électrique (12), d'une boîte de transmission principale de puissance (11) et au moins un dispositif de stockage (14) d'énergie électrique,
   - au moins un rotor principal (3) entraîné en rotation par ladite installation motrice hybride (5),

   ledit procédé d'assistance comportant les étapes suivantes :

   - une étape d'acquisition (110) d'au moins un paramètre de surveillance S dudit aéronef (2) afin de détecter une éventuelle panne dudit moteur principal (13),
   - au moins une étape de surveillance (120) d'au moins une machine électrique (12) lorsqu'au moins une relation d'activation comprenant des valeurs instantanées d'au moins un paramètre de surveillance S et de sa dérivée par rapport au temps est inférieure à un seuil d'activation $Seuil_i$ dédié, $i$ étant un entier positif variant de 1 à $n$, $n$ étant un entier positif supérieur ou égal à 1, $Seuil_i$ étant un seuil d'activation et $k_i$ étant un coefficient positif,
   - une étape d'assistance (130) dudit vol dudit aéronef (2), ladite au moins une machine électrique (12) fournissant une puissance mécanique auxiliaire $We$ audit rotor principal (3) de façon régulée, permettant ainsi d'assister ledit pilote dudit aéronef (2) lors de ladite phase de vol suite à ladite panne pour manœuvrer ledit aéronef (2), et
   - une étape de désactivation (140) de ladite étape d'assistance (130),

   **caractérisé en ce que** ledit procédé comporte un état dormant (10), un état de veille (20), un état armé (25) et un état activé (30), ledit procédé se trouvant dans ledit état dormant (10) dès le démarrage dudit aéronef (2), ladite étape de surveillance (120) ne pouvant pas être réalisée au cours dudit état dormant (10) et dudit état de veille (20), ladite étape d'assistance (130) ne pouvant pas être activée au cours dudit état armé (25), ladite étape d'assistance (130) étant activée au cours dudit état activé (30), ledit état dormant (10) comportant une étape de pré-activation (115) ainsi qu'une première étape d'inhibition (116) de ladite étape de pré-activation (115), ledit état de veille (20) comportant une étape d'armement (117) de ladite au moins une machine électrique (12) et une étape de synchronisation (125) de ladite au moins une machine électrique (12), ainsi qu'une première étape de sortie (124) dudit état de veille (20) et une quatrième étape d'inhibition (119) de ladite étape d'armement (117) et de ladite étape de synchronisation (125), ledit état armé (25) comportant ladite étape de surveillance (120) ainsi qu'une troisième étape de sortie (128) dudit état armé (25) et une deuxième étape d'inhibition (126) de ladite étape de surveillance (120), ledit état activé (30) comportant ladite étape d'assistance (130) et ladite étape de désactivation (115) ainsi qu'une deuxième étape de sortie (144) dudit état activé (30) et une troisième étape d'inhibition (146) de ladite étape de désactivation (115), ledit état dormant (10), ledit état de veille (20), ledit état armé (25) et ledit état activé (30) comportant ladite étape d'acquisition (110).

2. Procédé selon la revendication 1, **caractérisé en ce que** ledit procédé utilise une seule relation d'activation

$$S + k\frac{dS}{dt} < Seuil$$

$\frac{dS}{dt}$ étant la dérivée dudit paramètre $S$, $Seuil$ étant un seuil d'activation et $k$ étant un coefficient positif variable en fonction dudit paramètre de surveillance $S$ et de ladite dérivée, ledit seuil d'activation $Seuil$ et ledit coefficient $k$ étant dépendants dudit aéronef (2).

3. Procédé selon l'une quelconque des revendications 1 à 2, **caractérisé en ce qu'**un paramètre de surveillance S dudit aéronef (2) est une vitesse de rotation $Nr$ dudit rotor principal (3).

4. Procédé selon la revendication 3, **caractérisé en ce que** ladite vitesse de rotation $Nr$ est déterminée suite à une mesure d'une vitesse de rotation d'un pignon (19) de ladite boîte de transmission principale de transmission de puissance (11), ledit pignon (19) étant synchrone avec ledit rotor principal (3).

5. Procédé selon l'une quelconque des revendications 1 à 4, **caractérisé en ce que** ledit procédé comporte au moins une condition d'inhibition de ladite étape de surveillance (20) interdisant une réalisation de ladite étape d'assistance (130).

6. Procédé selon la revendication 5, **caractérisé en ce qu'**au moins une condition d'inhibition est choisie parmi la liste suivante :

- ledit aéronef (2) est au sol,
- ledit aéronef (2) est au dessus d'une hauteur-sol minimale,
- ledit aéronef (2) est en vol d'entraînement,
- un train d'atterrissage dudit aéronef (2) est détecté en appui au sol,
- la hauteur dudit aéronef (2) par rapport au sol ne varie pas et est inférieure ou égale à une hauteur prédéfinie,
- un paramètre de surveillance S est inférieur à un premier seuil d'inhibition,
- un paramètre de surveillance S est supérieur à un second seuil d'inhibition et
- - ladite dérivée d'un paramètre de surveillance S est comprise dans un intervalle d'inhibition prédéterminé.

7. Procédé selon l'une quelconque des revendications 1 à 6, **caractérisé en ce que** ladite étape de désactivation (140) applique une relation de désactivation faisant intervenir au moins un paramètre de surveillance S et éventuellement sa dérivée.

8. Procédé selon l'une quelconque des revendications 1 à 7, **caractérisé en ce que** ledit procédé d'assistance comporte au moins une condition d'inhibition de ladite étape de désactivation (140) interdisant d'arrêter ladite étape d'assistance (130).

9. Procédé selon l'une quelconque des revendications 1 à 8, **caractérisé en ce que** ledit procédé comporte une étape de synchronisation (125) de ladite au moins une machine électrique (12) au cours de laquelle ladite au moins machine électrique (12) est synchronisée avec ledit rotor principal (3), sans lui fournir de puissance.

10. Procédé selon la revendication 8, **caractérisé en ce que** ledit procédé comporte un état dormant (10), un état de veille (20) et un état activé (30), ledit procédé se trouvant dans ledit état dormant (10) dès le démarrage dudit aéronef (2), ladite étape de surveillance (120) ne pouvant pas être réalisée au cours dudit état dormant (10), ladite étape d'assistance (130) ne pouvant pas être activée au cours dudit état de veille (20), ladite étape d'assistance (130) étant activée au cours dudit état activé (30), ledit état dormant (10) comportant ladite étape de pré-activation (115) ainsi qu'une première étape d'inhibition (116) de ladite étape de pré-activation (115), ledit état de veille (20) comportant ladite étape de surveillance (120) ainsi qu'une première étape de sortie (124) dudit état de veille (20) et une deuxième étape d'inhibition (126) de ladite étape de surveillance (120), ledit état activé (30) comportant ladite étape d'assistance (130) et ladite étape de désactivation (115) ainsi qu'une deuxième étape de sortie (144) dudit état activé (30) et une troisième étape d'inhibition (146) de ladite étape de désactivation (115), ledit état dormant (10), ledit état de veille (20) et ledit état activé (30) comportant ladite étape d'acquisition (110).

11. Procédé selon l'une quelconque des revendications 1 à 10, **caractérisé en ce que** ledit au moins un seuil d'activation $Seuil_i$ est remplacé par un seuil de déclenchement $Seuil_i'$ prenant en compte une durée de déclenchement $\Delta t$ dudit au moins un dispositif de stockage (14) d'énergie électrique telle que : $Seuil_i' =$

$$Seuil_i - \frac{dS}{dt}.\Delta t$$

.

12. Procédé selon l'une quelconque des revendications 1 à 11, **caractérisé en ce que** lors de ladite étape d'assistance (130), ladite au moins une machine électrique (12) est régulée afin d'entraîner en rotation ledit rotor principal (3) jusqu'à l'atterrissage dudit aéronef (2).

13. Procédé selon l'une quelconque des revendications 1 à 12, **caractérisé en ce que** lors de ladite étape d'assistance (130), ladite au moins une machine électrique (12) fournit une puissance maximale avec une limitation sur le courant électrique consommé par ladite au moins une machine électrique (12).

14. Procédé selon l'une quelconque des revendications 1 à 12, **caractérisé en ce que** lors de ladite étape d'assistance (130), ladite au moins une machine électrique (12) fournit une première puissance prédéterminée audit rotor principal (3) pendant une première durée prédéterminée et une deuxième puissance prédéterminée audit rotor principal (3) pour l'atterrissage dudit aéronef (2).

15. Procédé selon l'une quelconque des revendications 1 à 12, **caractérisé en ce que** lors de ladite étape d'assistance (130), ladite au moins une machine électrique (12) fournit dans un premier temps un couple constant jusqu'à délivrer une puissance auxiliaire *We* égale à une puissance nominale prédéterminée, puis ladite au moins une machine électrique (12) fournit une puissance auxiliaire *We* égale à une puissance nominale prédéterminée jusqu'à ce qu'au moins un paramètre de surveillance S atteigne une valeur seuil, ladite au moins une machine électrique (12) étant ensuite régulée pour maintenir ledit au moins un paramètre de surveillance S égal à ladite valeur seuil.

**16.** Procédé selon l'une quelconque des revendications 1 à 12,
**caractérisé en ce que** lors de ladite étape d'assistance (130), ladite au moins une machine électrique (12) fournit dans un premier temps un couple constant jusqu'à délivrer une puissance auxiliaire *We* égale à une puissance nominale prédéterminée de ladite au moins une machine électrique (12), puis ladite au moins une machine électrique (12) fournit une puissance auxiliaire *We* égale à ladite puissance nominale prédéterminée jusqu'à ce qu'au moins un paramètre de surveillance S atteigne une valeur seuil, ladite au moins une machine électrique (12) étant ensuite régulée pour maintenir ledit au moins un paramètre de surveillance S égal à ladite valeur seuil.

**17.** Procédé selon l'une quelconque des revendications 1 à 12,
**caractérisé en ce que** lors de ladite étape d'assistance (130), ladite au moins une machine électrique (12) est régulée de sorte que ladite au moins une machine électrique (12) délivre une puissance auxiliaire *We* égale à une puissance maximale de ladite au moins une machine électrique (12), tout en limitant ladite puissance auxiliaire *We* par le couple maximum de ladite au moins une machine électrique (12).

**18.** Procédé selon l'une quelconque des revendications 1 à 12,
**caractérisé en ce que** lors de ladite étape d'assistance (130), ladite au moins une machine électrique (12) est régulée de sorte à maintenir au moins un paramètre de surveillance S égal à une valeur seuil.

**19.** Aéronef (2) à voilure tournante comportant :

- une installation motrice hybride (5) munie d'un unique moteur principal (13), d'au moins une machine électrique (12), d'au moins un dispositif de stockage (14) d'énergie électrique et d'une boîte de transmission principale de puissance (11),
- au moins un rotor principal (3) entraîné en rotation par ladite installation motrice hybride (5) et tournant à une vitesse de rotation *Nr,* et
- un dispositif (1) d'assistance en cas de panne dudit moteur principal (13) comportant :

  • ladite installation motrice hybride (5),
  • un dispositif de commande (15) de ladite machine électrique (12),
  • un dispositif de surveillance (18),
  • une unité de calcul (17), et
  • une mémoire (16),**caractérisé en ce que** ledit dispositif (1) d'assistance est configuré pour mettre en œuvre le procédé d'assistance selon l'une quelconque des revendications 1 à 18 afin d'assister un pilote dudit aéronef (2) lors d'une phase de vol en autorotation.

**20.** Aéronef (2) selon la revendication 19,
**caractérisé en ce que** ledit dispositif de surveillance (18) comporte un dispositif de mesure pour évaluer une chute de puissance dudit rotor principal (3).

**21.** Aéronef (2) selon l'une quelconque des revendications 19 à 20,
**caractérisé en ce que** ledit dispositif de surveillance (18) comporte un dispositif de mesure (9) de ladite vitesse de rotation *Nr.*

**Patentansprüche**

**1.** Verfahren zum Unterstützen eines einmotorigen Luftfahrzeugs (2) mit Drehflügeln im Falle eines Motorausfalls, wobei das Luftfahrzeug (2) umfasst:

- eine Hybridantriebsanlage (5) mit einem einzigen Hauptmotor (13), mindestens einer elektrischen Maschine (12), einem Hauptleistungsgetriebe (11) und mindestens einer Speichervorrichtung (14) für elektrische Energie,
- mindestens einen von der Hybridantriebsanlage (5) drehangetriebenen Hauptrotor (3),

wobei das Verfahren zum Unterstützen die folgenden Schritte umfasst:

- einen Schritt des Erfassens (110) mindestens eines Überwachungsparameters S des Luftfahrzeugs (2), um eine mögliche Störung des Haupttriebwerks (13) zu erkennen,
- mindestens einen Schritt des Überwachens (120) mindestens einer elektrischen Maschine (12), wenn mindestens eine Aktivierungsbeziehung, die Momentanwerte mindestens eines Überwachungsparameters S und seiner Ableitung nach der Zeit umfasst, kleiner als ein dedizierter Aktivierungsschwellenwert *Seuil_i* ist, wo-

bei i eine positive ganze Zahl ist, die von 1 bis n variiert, n eine positive ganze Zahl größer oder gleich 1 ist, Seuil$_i$ ein Aktivierungsschwellenwert ist und k$_i$ ein positiver Koeffizient ist,

- einen Schritt des Unterstützens (130) des Flugs des Luftfahrzeugs (2), wobei die mindestens eine elektrische Maschine (12) auf geregelte Weise eine mechanische Hilfsleistung We an den Hauptrotor (3) liefert, wodurch der Pilot des Luftfahrzeugs (2) während der Flugphase nach dem Ausfall beim Manövrieren des Luftfahrzeugs (2) unterstützt werden kann, und

- einen Schritt des Deaktivierens (140) des Schritts des Unterstützens (130),

**dadurch gekennzeichnet, dass** das Verfahren einen Ruhezustand (10), einen Bereitschaftszustand (20), einen scharfgeschalteten Zustand (25) und einen aktivierten Zustand (30) umfasst, wobei sich das Verfahren ab dem Start des Luftfahrzeugs (2) in dem Ruhezustand (10) befindet, wobei der Schritt des Überwachens (120) während des Ruhezustands (10) und des Bereitschaftszustands (20) nicht durchführbar ist, wobei der Schritt des Unterstützens (130) während des scharfgeschalteten Zustands (25) nicht aktivierbar ist, wobei der Schritt des Unterstützens (130) während des aktivierten Zustands (30) aktiviert wird, wobei der Ruhezustand (10) einen Schritt des Voraktivierens (115) sowie einen ersten Schritt des Sperrens (116) des Schritts des Voraktivierens (115) umfasst, wobei der Bereitschaftszustand (20) einen Schritt des Scharfschaltens (117) der mindestens einen elektrischen Maschine (12) und einen Schritt des Synchronisierens (125) der mindestens einen elektrischen Maschine (12) sowie einen ersten Schritt des Verlassens (124) des Bereitschaftszustands (20) und einen vierten Schritt des Sperrens (119) des Schritts des Scharfschaltens (117) und des Schritts des Synchronisierens (125) umfasst, wobei der scharfgeschaltete Zustand (25) den Schritt des Überwachens (120) sowie einen dritten Schritt des Verlassens (128) des scharfgeschalteten Zustands (25) und einen zweiten Schritt des Sperrens (126) des Schritts des Überwachens (120) umfasst, der aktivierte Zustand (30) den Schritt des Unterstützens (130) und den Schritt des Deaktivierens (115) sowie einen zweiten Schritt des Verlassens (144) des aktivierten Zustands (30) und einen dritten Schritt des Sperrens (146) des Schritts des Deaktivierens (115) umfasst, wobei der Ruhezustand (10), der Bereitschaftszustand (20), der scharfgeschaltete Zustand (25) und der aktivierte Zustand (30) den Schritt des Erfassens (110) umfasst.

2. Verfahren nach Anspruch 1,
**dadurch gekennzeichnet, dass** das Verfahren eine einzige Aktivierungsbeziehung

$$S + k\frac{dS}{dt} < Seuil$$

verwendet, wobei $\frac{dS}{dt}$ die Ableitung des Parameters S ist, Seuil eine Aktivierungsschwelle ist und k ein positiver Koeffizient ist, der in Abhängigkeit von dem Überwachungsparameter S und der Ableitung variabel ist, wobei die Aktivierungsschwelle Seuil und der Koeffizient k von dem Luftfahrzeug (2) abhängig sind.

3. Verfahren nach einem der Ansprüche 1 bis 2,
**dadurch gekennzeichnet, dass** ein Überwachungsparameter S des Luftfahrzeugs (2) eine Drehzahl Nr des Hauptrotors (3) ist.

4. Verfahren nach Anspruch 3,
**dadurch gekennzeichnet, dass** die Drehzahl Nr anhand einer Messung einer Drehgeschwindigkeit eines Ritzels (19) des Hauptleistungsgetriebes (11) bestimmt wird, wobei das Ritzel (19) mit dem Hauptrotor (3) synchronisiert ist.

5. Verfahren nach einem der Ansprüche 1 bis 4,
**dadurch gekennzeichnet, dass** das Verfahren mindestens eine Bedingung zum Sperren des Schritts des Überwachens (20) umfasst, die eine Durchführung des Schritts des Unterstützens (130) verbietet.

6. Verfahren nach Anspruch 5,
**dadurch gekennzeichnet, dass** mindestens eine Bedingung zum Sperren aus der folgenden Liste ausgewählt wird:

- das Luftfahrzeug (2) befindet sich am Boden,
- das Luftfahrzeug (2) befindet sich über einer minimalen Höhe über Grund,
- das Luftfahrzeug (2) befindet sich auf einem Übungsflug,
- ein Fahrwerk des Luftfahrzeugs (2) wird als auf dem Boden ruhend erfasst,
- die Höhe des Luftfahrzeugs (2) über dem Boden variiert nicht und ist kleiner oder gleich einer vordefinierten Höhe,
- ein Überwachungsparameter S ist kleiner als ein erster Sperrschwellenwert,
- ein Überwachungsparameter S ist größer als ein zweiter Sperrschwellenwert und
- die Ableitung eines Überwachungsparameters S liegt in einem vorgegebenen Sperrbereich.

7. Verfahren nach einem der Ansprüche 1 bis 6,
**dadurch gekennzeichnet, dass** der Schritt des Deaktivierens (140) eine Deaktivierungsbeziehung anwendet, in der mindestens ein Überwachungsparameter S und eventuell seine Ableitung vorkommen.

8. Verfahren nach einem der Ansprüche 1 bis 7, **dadurch gekennzeichnet, dass** das Verfahren zum Unterstützen mindestens eine Sperrbedingung für den Schritt des Deaktivierens (140) umfasst, die es verbietet, den Schritt des Unterstützens (130) zu stoppen.

9. Verfahren nach einem der Ansprüche 1 bis 8, **dadurch gekennzeichnet, dass** das Verfahren einen Schritt des Synchronisierens (125) der mindestens einen elektrischen Maschine (12) umfasst, während dessen die mindestens eine elektrische Maschine (12) mit dem Hauptrotor (3) synchronisiert wird, ohne diesem Leistung zuzuführen.

10. Verfahren nach Anspruch 8, **dadurch gekennzeichnet, dass** das Verfahren einen Ruhezustand (10), einen Bereitschaftszustand (20) und einen aktivierten Zustand (30) umfasst, wobei sich das Verfahren ab dem Start des Luftfahrzeugs (2) in dem Ruhezustand (10) befindet, wobei der Schritt des Überwachens (120) während des Ruhezustands (10) nicht durchführbar ist, der Schritt des Unterstützens (130) während des Bereitschaftszustands (20) nicht aktivierbar ist, wobei der Schritt des Unterstützens (130) während des aktivierten Zustands (30) aktiviert wird, wobei der Ruhezustand (10) den Schritt des Voraktivierens (115) sowie einen ersten Schritt des Sperrens (116) des Schritts des Voraktivierens (115) umfasst, wobei der Bereitschaftszustand (20) den Schritt des Überwachens (120) sowie einen ersten Schritt des Verlassens (124) des Bereitschaftszustands (20) und einen zweiten Schritt des Sperrens (126) des Schritts des Überwachens (120) umfasst, wobei der aktivierte Zustand (30) den Schritt des Unterstützens (130) und den Schritt des Deaktivierens (115) sowie einen zweiten Schritt des Verlassens (144) des aktivierten Zustands (30) und einen dritten Schritt des Sperrens (146) des Schritts des Deaktivierens (115) umfasst, wobei der Ruhezustand (10), der Bereitschaftszustand (20) und der aktivierte Zustand (30) den Schritt des Erfassens (110) umfasst.

11. Verfahren nach einem der Ansprüche 1 bis 10, **dadurch gekennzeichnet, dass** die mindestens eine Aktivierungsschwelle *Seuil_i* durch eine Auslöseschwelle *Seuil_i'* ersetzt wird, die eine Auslösedauer $\Delta t$ der mindestens einen Speichervorrichtung (14) für elektrische Energie berücksichtigt, so dass

$$Seuil'_i = Seuil_i - \frac{dS}{dt}.\Delta t$$
.

12. Verfahren nach einem der Ansprüche 1 bis 11, **dadurch gekennzeichnet, dass** während des Schritts des Unterstützens (130) die mindestens eine elektrische Maschine (12) geregelt wird, um den Hauptrotor (3) bis zur Landung des Luftfahrzeugs (2) drehanzutreiben.

13. Verfahren nach einem der Ansprüche 1 bis 12, **dadurch gekennzeichnet, dass** während des Schritts des Unterstützens (130) die mindestens eine elektrische Maschine (12) eine maximale Leistung bei einer Begrenzung des von der mindestens einen elektrischen Maschine (12) verbrauchten elektrischen Stroms liefert.

14. Verfahren nach einem der Ansprüche 1 bis 12, **dadurch gekennzeichnet, dass** in dem Schritt des Unterstützens (130) die mindestens eine elektrische Maschine (12) eine erste vorgegebene Leistung an den Hauptrotor (3) für eine erste vorgegebene Zeitdauer und eine zweite vorgegebene Leistung an den Hauptrotor (3) für die Landung des Luftfahrzeugs (2) liefert.

15. Verfahren nach einem der Ansprüche 1 bis 12, **dadurch gekennzeichnet, dass** bei dem Schritt des Unterstützens (130) die mindestens eine elektrische Maschine (12) zunächst ein konstantes Drehmoment liefert, bis eine Hilfsleistung We gleich einer vorgegebenen Nennleistung abgegeben wird, und dann die mindestens eine elektrische Maschine (12) eine Hilfsleistung We gleich einer vorgegebenen Nennleistung liefert, bis mindestens ein Überwachungsparameter S einen Schwellenwert erreicht, wobei die mindestens eine elektrische Maschine (12) anschließend geregelt wird, um den mindestens einen Überwachungsparameter S gleich dem Schwellenwert zu halten.

16. Verfahren nach einem der Ansprüche 1 bis 12, **dadurch gekennzeichnet, dass** bei dem Schritt des Unterstützens (130) die mindestens eine elektrische Maschine (12) zunächst ein konstantes Drehmoment liefert, bis sie eine Hilfsleistung We liefert, die gleich einer vorgegebenen Nennleistung der mindestens einen elektrischen Maschine (12) ist, die mindestens eine elektrische Maschine (12) dann eine Hilfsleistung We gleich der vorgegebenen Nennleistung liefert, bis mindestens ein Überwachungsparameter S einen Schwellenwert erreicht, wobei die mindestens eine elektrische Maschine (12) anschließend geregelt wird, um den mindestens einen Überwachungsparameter S gleich dem Schwellenwert zu halten.

17. Verfahren nach einem der Ansprüche 1 bis 12, **dadurch gekennzeichnet, dass** in dem Schritt des Unterstützens (130) die mindestens eine elektrische Maschine (12) so geregelt wird, dass die mindestens eine elektrische Maschine (12) eine Hilfsleistung We liefert, die gleich einer maximalen Leistung der mindestens einen elektrischen Maschine (12) ist, während die Hilfsleistung We durch das maximale Drehmoment der mindestens einen elektrischen Maschine (12) begrenzt wird.

18. Verfahren nach einem der Ansprüche 1 bis 12, **dadurch gekennzeichnet, dass** während des Schritts des Unterstützens (130) die mindestens eine elektrische Maschine (12) so geregelt wird, dass mindestens ein Überwachungsparameter S gleich einem Schwellenwert gehalten wird.

19. Drehflügelluftfahrzeug (2) mit:

- einer Hybridantriebsanlage (5) mit einem einzigen Hauptmotor (13), mindestens einer elektrischen Maschine (12), mindestens einer Speichervorrichtung (14) für elektrische Energie und einem Hauptleistungsgetriebe (11),
- mindestens einem von der Hybridantriebsanlage (5) drehangetriebenen Hauptrotor (3), der sich mit einer Drehzahl *Nr* dreht, und
- einer Vorrichtung (1) zum Unterstützen bei einer Störung des Hauptmotors (13), umfassend :

• die Hybridantriebsanlage (5),
• eine Steuervorrichtung (15) der elektrischen Maschine (12),
• eine Überwachungsvorrichtung (18),
• eine Recheneinheit (17), und
• einen Speicher (16),

**dadurch gekennzeichnet, dass** die Vorrichtung (1) zum Unterstützen konfiguriert ist, um das Verfahren zum Unterstützen nach einem der Ansprüche 1 bis 18 durchzuführen, um einen Piloten des Luftfahrzeugs (2) während einer Flugphase in Autorotation zu unterstützen.

20. Luftfahrzeug (2) nach Anspruch 19, **dadurch gekennzeichnet, dass** die Überwachungsvorrichtung (18) eine Messvorrichtung zum Bewerten eines Leistungsabfalls des Hauptrotors (3) umfasst.

21. Luftfahrzeug (2) nach einem der Ansprüche 19 bis 20, **dadurch gekennzeichnet, dass** die Überwachungsvorrichtung (18) eine Messvorrichtung (9) für die Drehzahl *Nr* umfasst.

## Claims

1. A method for assisting a single-engined rotary-wing aircraft (2) in the event of engine failure, said aircraft (2) including:

- a hybrid power plant (5) provided with a single main engine (13), with at least one electric machine (12), with a main gearbox (11) and with at least one electrical energy storage device (14),
- at least one main rotor (3) that is driven in rotation by said hybrid power plant (5), said assistance method including the following steps:
- a step (110) for acquiring at least one monitoring parameter S of said aircraft (2) in order to detect any failure of said main engine (13),
- at least one step (120) for monitoring at least one electric machine (12) when at least one activation relationship comprising instantaneous values of at least one monitoring parameter S and its time derivative is less than a dedicated activation threshold $Threshold_i$, where $i$ is a positive integer varying from 1 to $n$, where $n$ is a positive integer greater than or equal to 1, where $Threshold_i$ is an activation threshold, and where $k_i$ is a positive coefficient,
- a step (130) for assisting with the flight of said aircraft (2), said at least one electric machine (12) delivering auxiliary mechanical power We to said main rotor (3) in a regulated manner, thereby making it possible to assist the pilot of said aircraft (2) during the flight phase following said failure in manoeuvring said aircraft (2), and
- a step (140) for deactivating said assistance step (130),

**characterised in that** said method includes a dormant state (10), a standby state (20), a primed state (25) and an activated state (30), said method being in said dormant state (10) as soon as said aircraft (2) is started, it not being possible for said monitoring step (120) to be performed during said dormant state (10) or during said standby state (20), it not being possible for said assistance step (130) to be activated during said primed state (25), said assistance step (130) being activated during said activated state (30), said dormant state (10) including a pre-activation step (115) and a first inhibition step (116) for inhibiting said pre-activation step (115), said standby state (20) including a step (117) for priming said at least one electric machine (12), a step (125) for synchronising said at least one electric machine (12), as well as a first exit step (124) for exiting said standby state (20) and a fourth inhibition step (119) for inhibiting said priming state (117) and for inhibiting said synchronisation step (125), said primed state (25) including said monitoring step (120), as well as a third exit step (128) for exiting said primed state (25) and a second inhibition step (126) for inhibiting said monitoring step (120), said activated state (30) including said assistance step (130), said deactivation step (115), as well as a second exit step (144) for exiting said activated state (30) and a third inhibition step (146) for inhibiting said deactivation step (115), said dormant state (10), said standby state (20), said primed state (25) and said activated state (30) including said acquisition step (110).

2. The method according to claim 1, **characterised in that** said method uses a single activation relationship

$$S + k\frac{ds}{dt} < Threshold$$

where $\frac{ds}{dt}$ is the derivative of said parameter $S$, *Threshold* is an activation threshold, and k is a positive coefficient that varies as a function of said monitoring parameter S and of said derivative, said activation threshold *Threshold* and said coefficient k being dependent on said aircraft (2).

3. The method according to either claim 1 or claim 2, **characterised in that** a monitoring parameter S of said aircraft (2) is a speed of rotation *Nr* of said main rotor (3).

4. The method according to claim 3, **characterised in that** said speed of rotation *Nr* is determined following a measurement of a speed of rotation of a gearwheel (19) of said main gearbox (11), said gearwheel (19) being synchronous with said main rotor (3).

5. The method according to any of claims 1 to 4, **characterised in that** said method includes at least one inhibition condition said monitoring step (20), thereby preventing said assistance step (130) from being performed.

6. The method according to claim 5, **characterised in that** at least one inhibition condition is chosen from among the following list:

   - said aircraft (2) is on the ground,
   - said aircraft (2) is above a minimum height above the ground,
   - said aircraft (2) is on a training flight,
   - a landing gear of said aircraft (2) is detected as bearing against the ground,
   - the height of said aircraft (2) relative to the ground does not vary and is less than or equal to a predefined height,
   - a monitoring parameter S is less than a first inhibition threshold,
   - a monitoring parameter S is greater than a second inhibition threshold, and
   - said derivative of a monitoring parameter S lies within a predetermined inhibition range.

7. The method according to any of claims 1 to 6, **characterised in that** said deactivation step (140) applies a deactivation relationship that involves at least one monitoring parameter S and optionally its derivative.

8. The method according to any of claims 1 to 7, **characterised in that** said assistance method includes at least one inhibition condition said deactivation step (140), thereby preventing said assistance step (130) from being stopped.

9. The method according to any of claims 1 to 8, **characterised in that** said method includes a step (125) for synchronising said at least one electric machine (12), during which synchronisation step said at least one electric machine (12) is synchronised with said main rotor (3), without delevering power thereto.

10. The method according to claim 8, **characterised in that** said method includes a dormant state (10), a standby state (20) and an activated state (30), said method being in said dormant state (10) as soon as said aircraft (2) is started, it not being possible for said monitoring step (120) to be performed during said dormant state (10), it not being possible for said assistance step (130) to be activated during said standby state (20), said assistance step (130) being activated during said activated state (30), said dormant state (10) including said pre-activation step (115) and a first inhibition step (116) for inhibiting said pre-activation step (115), said standby state (20) including said monitoring step (120) and a first exit step (124) for exiting said standby state (20) and a second inhibition step (126) for inhibiting said monitoring step (120), said activated state (30) including said assistance step (130), said deactivation step (115) as well as a second exit step (144) for exiting said activated state (30) and a third inhibition step (146) for inhibiting said deactivation step (115), said dormant state (10), said standby state (20) and said activated state (30) including said acquisition step (110).

11. The method according to any of claims 1 to 10, **characterised in that** said at least one activation threshold *Threshold$_i$* is replaced by a trigger threshold *Threshold'$_i$* taking into account a trigger time *$\Delta t$* of said at least one electrical energy storage device (14) such that:

$$Threshold'_i = Threshold_i - \frac{ds}{dt}.\Delta t$$

**12.** The method according to any of claims 1 to 11, **characterised in that**, during said assistance step (130), said at least one electric machine (12) is regulated so as to drive said main rotor (3) in rotation until said aircraft (2) has landed.

**13.** The method according to any of claims 1 to 12, **characterised in that**, during said assistance step (130), said at least one electric machine (12) delivers maximum power with a limitation on the electric current consumed by said at least one electric machine (12).

**14.** The method according to any of claims 1 to 12, **characterised in that**, during said assistance step (130), said at least one electric machine (12) delivers a first predetermined amount of power to said main rotor (3) during a first predetermined duration of time and delivers a second predetermined amount of power to said main rotor (3) for landing said aircraft (2).

**15.** The method according to any of claims 1 to 12, **characterised in that**, during said assistance step (130), said at least one electric machine (12) firstly delivers constant torque until it delivers an auxiliary power We equal to a predetermined nominal power and then said at least one electric machine (12) delivers an auxiliary power We equal to a predetermined nominal power until at least one monitoring parameter S reaches a threshold value, said at least one electric machine (12) then being regulated to maintain said at least one monitoring parameter S equal to said threshold value.

**16.** The method according to any of claims 1 to 12, **characterised in that**, during said assistance step (130), said at least one electric machine (12) firstly delivers constant torque until it delivers an auxiliary power We equal to a predetermined nominal power of said at least one electric machine (12) and then said at least one electric machine (12) delivers an auxiliary power We equal to said predetermined nominal power until at least one monitoring parameter S reaches a threshold value, said at least one electric machine (12) then being regulated to maintain said at least one monitoring parameter S equal to said threshold value.

**17.** The method according to any of claims 1 to 12, **characterised in that**, during said assistance step (130), said at least one electric machine (12) is regulated such that said at least one electric machine (12) delivers an amount of auxiliary power We equal to a maximum amount of power of said at least one electric machine (12), while also limiting said auxiliary power We by the maximum torque of said at least one electric machine (12).

**18.** The method according to any of claims 1 to 12, **characterised in that**, during said assistance step (130), said at least one electric machine (12) is regulated so as to maintain at least one monitoring parameter S equal to a threshold value.

**19.** A rotary wing aircraft (2) including:

- a hybrid power plant (5) provided with a single main engine (13), with at least one electric machine (12), with at least one electrical energy storage device (14), and with a main gearbox (11),
- at least one main rotor (3) driven in rotation by said hybrid power plant (5) and turning at a speed of rotation Nr, and
- a device (1) for providing assistance in the event of a failure of said main engine (13) including:

• said hybrid power plant (5),
• a device (15) for controlling said electric machine (12),
• a monitoring device (18),
• a computer unit (17), and
• a memory (16), **characterised in that** said assistance device (1) is configured to implement the assistance method according to any of claims 1 to 18 in order to assist a pilot of said aircraft (2) during a flight phase in autorotation.

**20.** The aircraft (2) according to claim 19, **characterised in that** said monitoring device (18) includes a measurement device for assessing a drop in power in said main rotor (3).

**21.** The aircraft (2) according to either claim 19 or claim 20, **characterised in that** said monitoring device (18) includes a measurement device (9) for measuring said speed of rotation Nr.

Fig.1

110

120

130

140

3

4

1

18    9

15

19    11

5

13    12

16

7    6    14

17

2

Fig. 2

H

I

G

F

Fig. 3

J

G'    F'

I'

V

J'

Fig. 4

100

10

110

115

116

20

110

120        124

126

30

110        130

140        144

146

Fig.5

100

10

20

25

30

110

115

116

119

110

117          124

125

110

120          128

126

110          130

140          144

146

**RÉFÉRENCES CITÉES DANS LA DESCRIPTION**

**Documents brevets cités dans la description**

- FR 2994687
- FR 1560124
- EP 2692634 A
- EP 2778048 A
- US 9008942 B
- EP 2886456 A
- EP 3064437 A
- US 4500966 A
- FR 2952907